# EUROPEAN PATENT SPECIFICATION

(11) **EP 4 474 210 B1**
(45) Date of publication and mention of the grant of the patent: **07.10.2026**
(21) Application number: 23777624.0
(22) Date of filing: 01.02.2023
(51) Int. Cl.: B60L 58/27, B60L 15/00, B60L 58/21, B60L 58/22, B60L 58/25, H01M 10/657, H01M 10/6571, H02P 29/62, H02P 5/00, H02P 4/00, H02P 25/22, B60L 53/24, H01M 10/615, H01M 10/625, H01M 10/637

(54) **BATTERY SELF-HEATING APPARATUS AND METHOD, AND VEHICLE**
BATTERIESELBSTERHITZUNGSVORRICHTUNG UND -VERFAHREN SOWIE FAHRZEUG
APPAREIL ET PROCÉDÉ D'AUTO-CHAUFFAGE DE BATTERIE, ET VÉHICULE

(30) Priority: 31.03.2022 CN 202210346572
(43) Date of publication of application: 11.12.2024
(73) Proprietor: BYD Company Limited, Shenzhen, Guangdong 518118 (CN)
(72) Inventor: LING, Heping, Shenzhen, Guangdong 518118 (CN); YAN, Lei, Shenzhen, Guangdong 518118 (CN); ZHAI, Zhen, Shenzhen, Guangdong 518118 (CN); GAO, Wen, Shenzhen, Guangdong 518118 (CN); ZHU, Ke, Shenzhen, Guangdong 518118 (CN)
(74) Representative: Arnold & Siedsma
(86) International application number: PCT/CN2023/074134
(87) International publication number: WO 2023/185245

(56) References cited:
- WO-A1-2021/244277
- CN-A- 101 357 596
- CN-A- 110 116 653
- CN-A- 111 231 702
- CN-A- 111 347 938
- CN-A- 111 404 247
- CN-U- 215 752 030
- JP-A- 2021 013 225
- US-A1- 2016 344 082
- US-B1- 6 882 061
- US-B2- 7 956 563

## Description

### FIELD

The present invention relates to the field of vehicles, and specifically, to a battery self-heating apparatus and method, and a vehicle.

### BACKGROUND

In a low temperature environment, charging performance of a pure electric vehicle decreases. Therefore, a power battery of the pure electric vehicle needs to be heated, to increase a body temperature of the power battery, and ensure a power of the pure electric vehicle in cold conditions.

In the related art, a battery heating method mainly includes external heating and internal heating. The external heating means that a battery is heated by adding an additional heating device. When heating in such a manner, a cost is high, and heating efficiency is low. A principle of the internal heating is: performing charging and discharging by mainly using a battery cycle, and generating heat relying on internal resistance of the battery. However, a heating power is limited in a currently achievable battery self-heating technology. CN111404247A discloses a battery energy processing device comprising: an energy exchange interface; a step-down charging circuit; a battery oscillation heating circuit; and a controller to control the battery oscillation heating circuit. US7956563B2 and JP 2021 013225 A disclose systems and apparatus for an inverter system for use in a vehicle having a first energy source and a second energy source.

### SUMMARY

An objective of the present invention is to provide a battery self-heating apparatus and method, and a vehicle, to resolve or partially resolve the foregoing technical problems.

To implement the foregoing objective, the present invention provides a battery self-heating apparatus according to claim 1. The apparatus includes a first energy processing apparatus, a second energy processing apparatus, and a controller connected to each other. The first energy processing apparatus includes the first inverter and a first motor, and the second energy processing apparatus includes the second inverter and a second motor. A first bus terminal of the first inverter is connected to a positive electrode of the first power battery, and a second bus terminal of the first inverter is connected to a negative electrode of the first power battery, a negative electrode of the second power battery, and a second bus terminal of the second inverter. A first terminal of the first motor is connected to a midpoint of the first inverter, a first terminal of the second motor is connected to a midpoint of the second inverter, and a second terminal of the first motor is jointly connected to form a first neutral point, and the first neutral point is connected to a second neutral point formed by jointly connecting a second terminal of the second motor, through a neutral line. The controller is configured to control connect/disconnect of the first inverter and the second inverter in a first preset state, to enable the first power battery and the second power battery to be charged/discharged through the first energy processing apparatus and the second energy processing apparatus, to implement heating of the first power battery and the second power battery.

In the invention, the apparatus further includes: a first switch, the first switch being connected between the first neutral point and the second neutral point, and when the first switch is closed, the first neutral point being connected to the second neutral point; and the controller, being configured to control the first switch to be closed in the first preset state.

In the invention, the apparatus further includes: a second switch, the second switch being connected to the positive electrode of the first power battery, a positive electrode of the second power battery, the first bus terminal of the first inverter, and a first bus terminal of the second inverter, and when the second switch is closed, the positive electrode of the first power battery, the positive electrode of the second power battery, the first bus terminal of the first inverter S, and the first bus terminal of the second inverter being closed; and the controller, being configured to control the first switch to be opened and control the second switch to be closed in a second preset state, to enable an external power supply to charge the first power battery and the second power battery.

Optionally, the controller is configured to control an upper bridge arm of the first inverter and a lower bridge arm of the second inverter to be simultaneously closed in the first preset state, or control a lower bridge arm of the first inverter and an upper bridge arm of the second inverter to be simultaneously closed, to enable the first power battery and the second power battery to be charged/discharged through the first energy processing apparatus and the second energy processing apparatus, to implement heating of the first power battery and the second power battery.

Optionally, the apparatus further includes a third energy processing apparatus and a third switch. The third energy processing apparatus includes a third inverter and a third motor, a first bus terminal of the third inverter is connected to the positive electrode of the second power battery, the first bus terminal of the second inverter, and the second switch, and a second bus terminal of the third inverter is connected to the negative electrode of the first power battery, the negative electrode of the second power battery, the second bus terminal of the first inverter, and the second bus terminal of the second inverter, a first terminal of the third motor is connected to a midpoint of the third inverter, a second terminal of the third motor is jointly connected to form a third neutral point, and the third neutral point is connected to the first switch and the second neutral point through the third switch. The controller is configured to control the first switch and the third switch to be closed and control the second switch to be opened in the first preset state, and control connect/disconnect of the first inverter, the second inverter, and the third inverter, to enable the first power battery and the second power battery to be charged/discharged through the first energy processing apparatus, the second energy processing apparatus, and the third energy processing apparatus, to implement heating of the first power battery and the second power battery.

Optionally, the apparatus further includes a fourth energy processing apparatus and a fourth switch. The fourth energy processing apparatus includes a fourth inverter and a fourth motor, a first bus terminal of the fourth inverter is connected to the positive electrode of the first power battery, the first bus terminal of the first inverter, and the second switch, a second bus terminal of the fourth inverter is connected to the negative electrode of the first power battery, the negative electrode of the second power battery, the second bus terminal of the first inverter, and the second bus terminal of the second inverter, a first terminal of the fourth motor is connected to a midpoint of the fourth inverter, a second terminal of the fourth motor is jointly connected to form a fourth neutral point, and the fourth neutral point is connected to the first switch and the first neutral point through the fourth switch. The controller is configured to control the first switch and the fourth switch to be closed and control the second switch to be opened in the first preset state, and control connect/disconnect of the first inverter, the second inverter, and the fourth inverter, to enable the first power battery and the second power battery to be charged/discharged through the first energy processing apparatus, the second energy processing apparatus, and the fourth energy processing apparatus, to implement heating of the first power battery and the second power battery.

Optionally, the apparatus further includes a fifth energy processing apparatus and a sixth energy processing apparatus.

The fifth energy processing apparatus includes a fifth inverter and a fifth motor, and the sixth energy processing apparatus includes a sixth inverter and a sixth motor.

A first bus terminal of the fifth inverter is connected to the negative electrode of the first power battery, the negative electrode of the second power battery, a positive electrode of a third power battery, a positive electrode of a fourth power battery, the second bus terminal of the first inverter, and the second bus terminal of the second inverter. A second bus terminal of the fifth inverter is connected to a negative electrode of the third power battery, a negative electrode of a fourth power battery, and a second bus terminal of the sixth inverter. A first terminal of the fifth motor is connected to a midpoint of the fifth inverter, a first terminal of the sixth motor is connected to a midpoint of the sixth inverter, and a second terminal of the fifth motor is jointly connected to form a fifth neutral point, and is connected to a sixth neutral point formed by jointly connecting a second terminal of the sixth motor. The controller is configured to control the first switch to be closed and control the second switch to be opened in the first preset state, and control connect/disconnect of the first inverter, the second inverter, the fifth inverter, and the sixth inverter, to enable the first power battery, the second power battery, the third power battery, and the fourth power battery to be charged/discharged through the first energy processing apparatus, the second energy processing apparatus, the fifth energy processing apparatus, and the sixth energy processing apparatus, to implement heating of the first power battery, the second power battery, the third power battery, and the fourth power battery.

Optionally, the apparatus further includes a fifth switch, a sixth switch, a seventh switch, and an eighth switch. The fifth switch is connected between the fifth neutral point and the sixth neutral point, and when the fifth switch is closed, the fifth neutral point is connected to the sixth neutral point. A first terminal of the sixth switch is connected to the first bus terminal of the fifth inverter and a first terminal of the eighth switch, a second terminal of the sixth switch is connected to a first bus terminal of the sixth inverter, the second bus terminal of the second inverter, the second bus terminal of the first inverter, the negative electrode of the second power battery, the positive electrode of the fourth power battery, and a first terminal of the seventh switch, and when the sixth switch is closed, the first terminal of the sixth switch is connected to the second terminal of the sixth switch. A second terminal of the seventh switch is connected to the second bus terminal of the fifth inverter, the second bus terminal of the sixth inverter, the negative electrode of the third power battery, and the negative electrode of the fourth power battery. A third terminal of the seventh switch is connected to the negative electrode of the first power battery, the positive electrode of the third power battery, and a second terminal of the eighth switch. A third terminal of the eighth switch is connected to the first bus terminal of the first inverter, the second switch, and the positive electrode of the first power battery. The controller is configured to control the first switch and the fifth switch to be opened, and control the second switch and the sixth switch to be closed in the second preset state, control the first terminal of the seventh switch to be connected to the second terminal of the seventh switch, and control the first terminal of the eighth switch to be connected to the third terminal of the eighth switch, to enable the external power supply to charge the first power battery, the second power battery, the third power battery, and the fourth power battery.

Optionally, the controller is configured to control connect/disconnect of the first inverter, the second inverter, the third inverter, and the fourth inverter in the first preset state, to enable the first power battery and the second power battery to be charged/discharged through the first energy processing apparatus and the second energy processing apparatus, and to enable the third power battery and the fourth power battery to be charged/discharged through the fifth energy processing apparatus and the sixth energy processing apparatus, to implement heating of the first power battery, the second power battery, the third power battery, and the fourth power battery. When the first power battery charges the second power battery, the fourth power battery charges the third power battery, and when the second power battery charges the first power battery, the third power battery charges the fourth power battery.

Optionally, the first motor, the second motor, the third motor, and the fourth motor respectively are drive motors in a vehicle. The controller is configured to control the first switch, the second switch, the fifth switch, and the sixth switch to be opened in a third preset state, control the first terminal of the seventh switch to be connected to the third terminal of the seventh switch, and control the first terminal of the eighth switch to be connected to the second terminal of the eighth switch, to enable the first power battery, the second power battery, the third power battery, and the fourth power battery to drive the vehicle through the first motor, the second motor, the third motor, and the fourth motor respectively.

Optionally, the first inverter, the second inverter, the fifth inverter, and the sixth inverter respectively include three sets of bridge arms. Each of the first motor, the second motor, the fifth motor, and the sixth motor is a three-phase motor, and includes three motor windings, and in the first preset state, currents in the three motor windings in each of the first motor, the second motor, the fifth motor, and the sixth motor are in a same direction at each moment.

Optionally, the controller is configured to export, in the first preset state, heat generated by the first power battery and the second power battery to a vehicle passenger compartment through a heat pump to provide a heat source.

The present invention further provides a battery self-heating method according to claim 11. The method includes: controlling connect/disconnect of a first inverter and a second inverter in a first preset state, to enable a first power battery and a second power battery to be charged/discharged through a first energy processing apparatus and a second energy processing apparatus, to implement heating of the first power battery and the second power battery. The first energy processing apparatus includes the first inverter and a first motor, and the second energy processing apparatus includes the second inverter and a second motor. A first bus terminal of the first inverter is connected to a positive electrode of the first power battery, and a second bus terminal of the first inverter is connected to a negative electrode of the first power battery, a negative electrode of the second power battery, and a second bus terminal of the second inverter. A first terminal of the first motor is connected to a midpoint of the first inverter, a first terminal of the second motor is connected to a midpoint of the second inverter, and a second terminal of the first motor is jointly connected to form a first neutral point, and the first neutral point is connected to a second neutral point formed by jointly connecting a second terminal of the second motor, through a neutral line.

The present invention further provides an electric vehicle, including the battery self-heating apparatus.

Through the foregoing technical solution, a battery self-heating apparatus that performs low-frequency oscillation heating by using dual motors and dual electric controls is provided, which may fully use characteristics that some electric vehicles such as a four-wheel drive electric vehicle have such as the dual motors and the dual electric controls. By connecting the dual motors through the neutral line, self-heating efficiency and a power of the power battery are greatly improved, and a lower cost is ensured.

Other features and advantages of the present invention will be described in detail in the following detailed implementation part.

### BRIEF DESCRIPTION OF THE DRAWINGS

The accompanying drawings are intended to provide further understanding of the present invention and constitute a part of this specification. The accompanying drawings and the specific implementations below are used together for explaining the present invention rather than constituting a limitation to the present invention. In the accompanying drawings,
FIG. 1 is a schematic diagram of a structure of a battery self-heating apparatus not according to invention;
FIG. 2 is a schematic diagram of a structure of a battery self-heating apparatus according to an exemplary embodiment of the present invention;
FIG. 3 is a schematic diagram of a structure of a battery self-heating apparatus according to still another exemplary embodiment of the present invention;
FIG. 4 is a schematic diagram of a structure of a battery self-heating apparatus according to still another exemplary embodiment of the present invention;
FIG. 5 is a schematic diagram of a structure of a battery self-heating apparatus according to still another exemplary embodiment of the present invention;
FIG. 6 is a schematic diagram of a structure of a battery self-heating apparatus according to still another exemplary embodiment of the present invention;
FIG. 7 is a schematic diagram of terminal points of a seventh switch and an eighth switch in a battery self-heating apparatus according to still another exemplary embodiment of the present invention;
FIG. 8 is a flowchart of a battery self-heating method according to an exemplary embodiment of the present invention; and
FIG. 9 is a structural block diagram of an electric vehicle according to an exemplary embodiment of the present invention.

### DETAILED DESCRIPTION

Specific implementations of the present invention are described in detail below with reference to the accompanying drawings. It should be understood that the specific implementations described herein are merely used to describe and explain the present invention, but are not intended to limit the present invention.

It should be noted that, all actions to obtain signals, information, or data in the present invention are performed in compliance with corresponding data protection regulations and policies of a country, and with authorization from an owner of a corresponding apparatus.

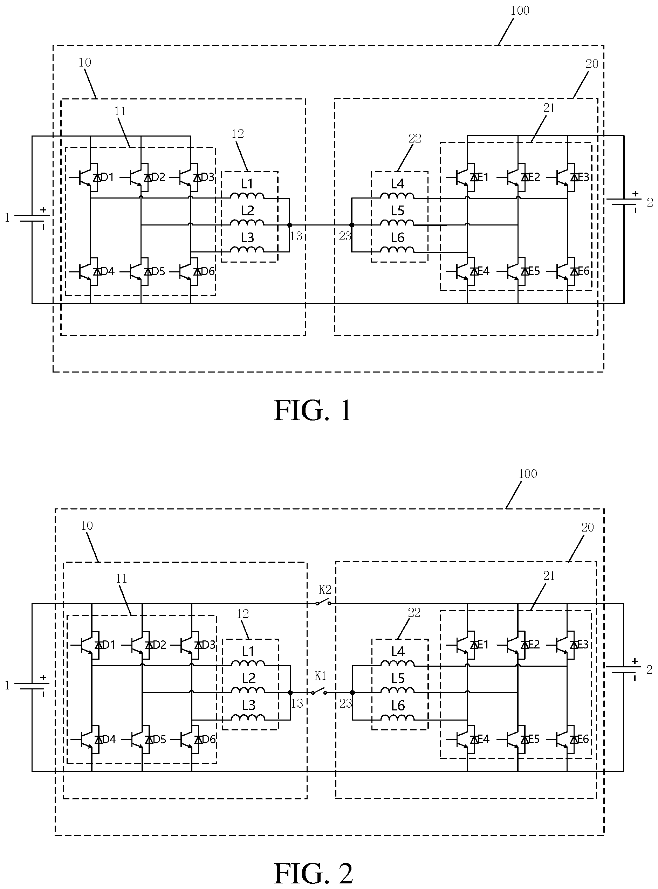

FIG. 1 is a schematic diagram of a structure of a battery self-heating apparatus not according to the present invention. As shown in FIG. 1, the apparatus includes a first energy processing apparatus 10, a second energy processing apparatus 20, and a controller (not shown) connected to each other. The first energy processing apparatus 10 includes a first inverter 11 and a first motor 12, and the second energy processing apparatus 20 includes a second inverter 21 and a second motor 22. A first bus terminal of the first inverter 11 is connected to a positive electrode of a first power battery 1, a second bus terminal of the first inverter 11 is connected to a negative electrode of the first power battery 1, a negative electrode of a second power battery 2, and a second bus terminal of the second inverter 21. A first terminal of the first motor 12 is connected to a midpoint of the first inverter 11, a first terminal of the second motor 22 is connected to a midpoint of the second inverter 21, and a second terminal of the first motor 12 is jointly connected to form a first neutral point 13, and the first neutral point is connected to a second neutral point 23 formed by jointly connecting a second terminal of the second motor 22, through a neutral line. The controller is configured to control connect/disconnect of the first inverter 11 and the second inverter 21 in a first preset state, to enable the first power battery 1 and the second power battery 2 to be charged/discharged through the first energy processing apparatus 10 and the second energy processing apparatus 20, to implement heating of the first power battery 1 and the second power battery 2.

Both the first power battery 1 and the second power battery 2 shown in FIG. 1 may be power batteries in a same electric vehicle. The first energy processing apparatus 10 and the second energy processing apparatus 20 may also be components of the same electric vehicle. The electric vehicle may include an electric or hybrid vehicle, ship, airplane, or the like. The following descriptions mainly use the vehicle as an example. For example, a current four-wheel drive electric vehicle mostly uses a system with dual motors and dual electronic controls. The first inverter 11 may be an inverter in a first motor controller in the vehicle. The first motor 12 may be a first motor controlled by the first motor controller in the vehicle. The second inverter 21 may be an inverter in a second motor controller in the vehicle. The second motor 22 may be a second motor controlled by the second motor controller in the vehicle.

The first preset state may be a state in which the first power battery 1 and the second power battery 2 need to be heated. For example, a power of the first power battery 1 and a power of the second power battery 2 are lower than a preset power threshold, or a temperature of the first power battery 1 and a temperature of the second power battery 2 are lower than a preset temperature threshold.

The controller controls connect/disconnect of the first inverter 11 and the second inverter 21 in the first preset state, so that an oscillating current is generated between the first power battery 1 and the second power battery 2 through the first energy processing apparatus 10 and the second energy processing apparatus 20, to enable the first power battery 1 and the second power battery 2 to be charged/discharged, to implement heating of the first power battery 1 and the second power battery 2. In this way, in comparison to a solution in which only a single motor and a single electronic control in the vehicle are used to perform battery self-heating, when the two motors and the two electronic controls in the vehicle are included in a battery oscillation heating process, an added motor and an added electronic control further generate heat in the self-heating process, and the heat generated is at least twice the heat generated by an original single motor and single electronic control for self-heating, which may greatly improve battery self-heating efficiency. In addition, due to a high increase in heat production, when there is excess heating heat needed by the battery, the excess heat may be further exported through a heat pump, to provide a heat source for a vehicle passenger compartment, thereby reducing energy that needs to be consumed when the vehicle passenger compartment is heated. In addition, because both the first energy processing apparatus 10 and the second energy processing apparatus 20 may be original components in the vehicle, existing components in the vehicle may be fully used to heat a power battery of the vehicle, thereby reducing costs.

Bridge arms in the first inverter 11 and the second inverter 21 may be three-phase bridge arms as shown in FIG. 1, or may be bridge arms of other quantities. The bridge arms in FIG. 1 are only illustrative. A quantity of motor windings included in the first motor 12 and the second motor 22 respectively corresponds to the quantity of bridge arms in the first inverter 11 and the second inverter 21.

An example in which the bridge arms in the first inverter 11 and the second inverter 21 shown in FIG. 1 are three-phase bridge arms, and the first motor 12 and the second motor 22 include three motor windings (L1, L2, L3, L4, L5, and L6 respectively) is used. The controller may control upper bridge arms of the first inverter 11 and lower bridge arms of the second inverter 21 to be simultaneously closed in the first preset state, or control lower bridge arms of the first inverter 11 and upper bridge arms of the second inverter 21 to be simultaneously closed, to implement self-heating of the first power battery 1 and the second power battery 2. In the heating period, current states in the first energy processing apparatus 10 and the second energy processing apparatus 20 may include the following four states.

State 1: Three upper bridge arms (D1, D2, and D3) in the first inverter 11 and three lower bridge arms (E4, E5, and E6) in the second inverter 21 are controlled to be closed. Three lower bridge arms (D4, D5, and D6) in the first inverter 11 and three upper bridge arms (E1, E2, and E3) in the second inverter 21 are controlled to be opened. The first power battery 1 is discharged externally, and the first motor 12 and the second motor 22 store energy. A current flows out from the positive electrode of the first power battery 1, flows to the first motor 12 through the three upper bridge arms (D1, D2, and D3) in the first inverter 11, then flows out from the second motor 22 through a neutral line between the first motor 12 and the second motor 22, and flows back to the negative electrode of the first power battery 1 through the three lower bridge arms (E4, E5, and E6) in the second inverter 21. In this state, the first power battery 1 is discharged, the first motor 12 and the second motor 22 are charged, and a voltage in the first power battery 1 drops.

State 2: The three lower bridge arms (D4, D5, and D6) in the first inverter 11 and the three upper bridge arms (E1, E2, and E3) in the second inverter 21 are controlled to be closed. The three upper bridge arms (D1, D2, and D3) in the first inverter 11 and the three lower bridge arms (E4, E5, and E6) in the second inverter 21 are controlled to be opened. Because the current on the motor winding 20 cannot change suddenly, currents in the first motor 12 and the second motor 22 continue to flow. The freewheeling currents flow through diodes connected in anti-parallel in the three upper bridge arms (E1, E2, and E3) in the second inverter 21, flow into a positive electrode of the second power battery 2, and charge the second power battery 2. Charging currents then flow out from the negative electrode of the second power battery 2, flow through diodes connected in anti-parallel in the three lower bridge arms (D4, D5, and D6) in the first inverter 11, and return to the first motor 12 and the second motor 22. In this state, the first motor 12 and the second motor 22 are discharged, the second power battery 2 is charged, the first motor 12 and the second motor 22 release the electric energy stored in a previous state, and the electric energy is transferred to the second power battery 2. A voltage in the first motor 12 and a voltage in the second motor 22 drop, and a voltage of the second power battery 2 rises.

State 3: A connect/disconnect state in the first inverter 11 and a connect/disconnect state in the second inverter 21 remain unchanged. In this case, the voltage of the second power battery 2 reaches a highest level, and the current flows out from the positive electrode of the second power battery 2. The current flows through the three upper bridge arms (E1, E2, and E3) in the second inverter 21, the second motor 22, the first motor 12, and the three lower bridge arms (D4, D5, and D6) in the first inverter 11, and finally flows back to the negative electrode of the second power battery 2. In this state, the second power battery 2 is discharged, and the voltage drops. The released electric energy is stored in the first motor 12 and the second motor 22. The first motor 12 and the second motor 22 are charged, and the voltage rises.

State 4: The three upper bridge arms (D1, D2, and D3) in the first inverter 11 and the three lower bridge arms (E4, E5, and E6) in the second inverter 21 are controlled to be closed. The three lower bridge arms (D4, D5, and D6) in the first inverter 11 and the three upper bridge arms (E1, E2, and E3) in the second inverter 21 are controlled to be opened. Currents in the first motor 12 and the second motor 22 continue to flow. The freewheeling currents flow through diodes connected in anti-parallel in the three upper bridge arms (D1, D2, and D3) in the first inverter 11, flow into the positive electrode of the first power battery 1, and charge the first power battery 1. Charging currents then flow out from the negative electrode of the first power battery 1, flow through diodes connected in anti-parallel in the three lower bridge arms (E4, E5, and E6) of the second inverter 21, and return to the first motor 12 and the second motor 22. In this state, the first motor 12 and the second motor 22 are discharged, and the voltage drops. The first power battery 1 is charged, and the voltage rises.

In the battery self-heating process, both the first power battery 1 and the second power battery 2 undergo charging and discharging processes, so that a self-heating effect may be implemented through both the first power battery 1 and the second power battery 2.

In addition, in a common circuit including a motor, a current flowing through the motor needs to have different directions at any moment, to ensure that a sum of currents entering a neutral point (N point) of the motor is equal to a sum of currents flowing out of a neutral point of the motor. For example, it may be one phase in and one phase out, or one phase in and two phases out, or one phase out and two phases in. Therefore, a maximum current passing through a conventional motor may be only a current limit of one phase of the motor winding. In the schematic diagram of the battery self-heating apparatus shown in FIG. 1, because both the first motor 12 and the second motor 22 may draw the current through the neutral line connected between the first motor 12 and the second motor 22, so that currents in the three-phase motor windings in the first motor 12 and the second motor 22 may flow in a same direction. As a result, magnitudes of currents that can pass through the first motor 12 and the second motor 22 are greatly increased, and a maximum overcurrent capacity of the motor may be fully utilized. The greater the current, more heat is generated in the first power battery 1 and the second power battery 2, and therefore, battery self-heating efficiency implemented in this embodiment may be further improved.

In addition, the bridge arms in the first inverter 11 and the second inverter 21 shown in FIG. 1 are three-phase bridge arms, and when each of the first motor 12 and the second motor 22 includes three motor windings, if the currents in the three motor windings in each of the first motor 12 and the second motor 22 are in a same direction, the currents in the three motor windings are equal in magnitude. An electromagnetic force synthesized in the motor is zero in real time, thereby implementing an output of zero torque. This may ensure that the motor remains static in the battery self-heating process without any additional torque control.

Through the foregoing technical solution, a battery self-heating apparatus that performs low-frequency oscillation heating by using dual motors and dual electric controls is provided, which may fully use characteristics that some electric vehicles such as a four-wheel drive electric vehicle have the dual motors and the dual electric controls. By connecting the dual motors through the neutral line, self-heating efficiency and a power of the power battery are greatly improved, and a lower cost is ensured.

FIG. 2 is a schematic diagram of a structure of a battery self-heating apparatus according to an exemplary embodiment of the present invention. As shown in FIG. 2, the apparatus further includes: a first switch K1, the first switch K1 being connected between the first neutral point 13 and the second neutral point 23, and when the first switch K1 is closed, the first neutral point 13 being connected to the second neutral point 23; and the controller, being configured to control the first switch K1 to be closed in the first preset state. In other words, the first motor 12 is connected to the second motor 22 in the first preset state, to enable the first power battery 1 and the second power battery 2 to be charged/discharged through the first energy processing apparatus 10 and the second energy processing apparatus 20, to implement heating of the first power battery 1 and the second power battery 2.

In the invention, as shown in FIG. 2, the apparatus further includes: a second switch K2, the second switch K2 being connected to the positive electrode of the first power battery 1, a positive electrode of the second power battery 2, the first bus terminal of the first inverter 11, and a first bus terminal of the second inverter 21, and when the second switch K2 is closed, the positive electrode of the first power battery 1, the positive electrode of the second power battery 2, the first bus terminal of the first inverter 11, and the first bus terminal of the second inverter 21 being closed; and the controller, being configured to control the first switch K1 to be opened and control the second switch K2 to be closed in a second preset state, to enable an external power supply to charge the first power battery 1 and the second power battery 2. The second preset state may be a state in which the first power battery 1 and the second power battery 2 need to be charged. For example, the vehicle has established a connection with an external charging pile, or the power of the first power battery 1 and the power of the second power battery 2 are lower than the preset power threshold. In this case, the first power battery 1 and the second power battery 2 are separately charged as independent battery packs.

In a possible implementation, the first motor 12 and the second motor 22 may be drive motors in the vehicle, and the controller is configured to control the first switch K1 and the second switch K2 to be opened in a third preset state, to enable the first power battery 1 and the second power battery 2 to drive the vehicle through the first motor 12 and the second motor 22 respectively. The third preset state is also a state in which the vehicle needs to run normally. In this state, by controlling the first switch K1 and the second switch K2 to be opened, the first motor 12 and the second motor 22 may be enabled to separately complete corresponding driving functions.

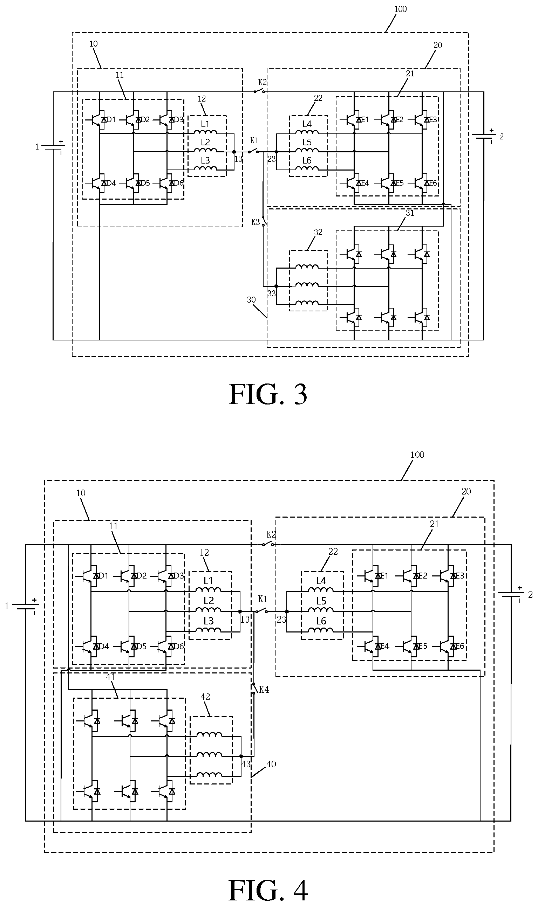

In addition, based on heating the battery in the vehicle by using dual motors and dual electronic controls to implement an oscillation heating circuit, more motors and motor controllers may be further added to the circuit to further enhance a battery self-heating effect. For example, FIG. 3 and FIG. 4 below separately show two schematic diagrams of structures of battery self-heating circuits that may be formed when there are two power batteries in the vehicle and there are three motors and three motor controllers.

FIG. 3 is a schematic diagram of a structure of a battery self-heating apparatus according to still another exemplary embodiment of the present invention. As shown in FIG. 3, the apparatus further includes a third energy processing apparatus 30 and a third switch K3. The third energy processing apparatus 30 includes a third inverter 31 and a third motor 32, a first bus terminal of the third inverter 31 is connected to the positive electrode of the second power battery 2, the first bus terminal of the second inverter 21, and the second switch K2, and a second bus terminal of the third inverter 31 is connected to the negative electrode of the first power battery 1, the negative electrode of the second power battery 2, the second bus terminal of the first inverter 11, and the second bus terminal of the second inverter 21, a first terminal of the third motor 32 is connected to a midpoint of the third inverter 31, a second terminal of the third motor 32 is jointly connected to form a third neutral point 33, and the third neutral point 33 is connected to the first switch K1 and the second neutral point 23 through the third switch K3. The controller is configured to control the first switch K1 and the third switch K3 to be closed and the second switch K2 to be opened in the first preset state, and control connect/disconnect of the first inverter 11, the second inverter 21, and the third inverter 31, to enable the first power battery 1 and the second power battery 2 to be charged/discharged through the first energy processing apparatus 10, the second energy processing apparatus 20, and the third energy processing apparatus 30, to implement heating of the first power battery 1 and the second power battery 2.

In this embodiment, the third energy processing apparatus 30 is connected to the second power battery 2 together with the second energy processing apparatus. In the first preset state, the controller may control the first switch K1 and the third switch K3 to be closed, and control the second switch K2 to be opened, to form a battery self-heating apparatus including the first energy processing apparatus 10, the second energy processing apparatus 20, and the third energy processing apparatus 30. A direction and a principle of a self-heating current of the battery self-heating apparatus are the same as those described in the embodiment shown in FIG. 1. Connect/disconnect of the upper bridge arm and connect/disconnect of the lower bridge arm in the third energy processing apparatus 30 are consistent with connect/disconnect of the upper bridge arm and connect/disconnect of the lower bridge arm in the second energy processing apparatus 20. The third energy processing apparatus 30 and the second energy processing apparatus 20 as a whole jointly form a current loop with the first energy processing apparatus 10, to implement charging/discharging of the first power battery 1 and the second power battery 2 in the foregoing four states. In the second preset state, the first switch K1 and the third switch K3 may be opened, and the second switch K2 may be closed, to enable an external charging device such as a charging pile to simultaneously charge the first power battery 1 and the second power battery 2 separately. In the third preset state, the first switch K1, the second switch K2, and the third switch K3 may be opened, to enable three motors in the first energy processing apparatus 10, the second energy processing apparatus 20, and the third energy processing apparatus 30 to separately provide drive for the vehicle.

FIG. 4 is a schematic diagram of a structure of a battery self-heating apparatus according to still another exemplary embodiment of the present invention. As shown in FIG. 4, the apparatus further includes a fourth energy processing apparatus 40 and a fourth switch K4. The fourth energy processing apparatus 40 includes a fourth inverter 41 and a fourth motor 42, a first bus terminal of the fourth inverter 41 is connected to the positive electrode of the first power battery 1, the first bus terminal of the first inverter 11, and the second switch K2, a second bus terminal of the fourth inverter 41 is connected to the negative electrode of the first power battery 1, the negative electrode of the second power battery 2, the second bus terminal of the first inverter 11, and the second bus terminal of the second inverter 21, a first terminal of the fourth motor 42 is connected to a midpoint of the fourth inverter 41, a second terminal of the fourth motor 42 is jointly connected to form a fourth neutral point 43, and the fourth neutral point 43 is connected to the first switch K1 and the first neutral point 13 through the fourth switch K4. The controller is configured to control the first switch K1 and the fourth switch K4 to be closed and control the second switch K2 to be opened in the first preset state, and control connect/disconnect of the first inverter 11, the second inverter 21, and the fourth inverter 41, to enable the first power battery 1 and the second power battery 2 to be charged/discharged through the first energy processing apparatus 10, the second energy processing apparatus 20, and the fourth energy processing apparatus 40, to implement heating of the first power battery 1 and the second power battery 2.

In this embodiment, the fourth energy processing apparatus 40 is connected to the first power battery 1 together with the first energy processing apparatus 10. In the first preset state, the first switch K1 and the fourth switch K4 are controlled to be closed, and the second switch K2 is controlled to be opened, to form a battery self-heating apparatus including the first energy processing apparatus 10, the second energy processing apparatus 20, and the fourth energy processing apparatus 40. A direction and a principle of a self-heating current of the battery self-heating apparatus are the same as those described in the embodiment shown in FIG. 1. Connect/disconnect of the upper bridge arm and connect/disconnect of the lower bridge arm in the fourth energy processing apparatus 40 are consistent with connect/disconnect of the upper bridge arm and connect/disconnect of the lower bridge arm in the first energy processing apparatus 10. The fourth energy processing apparatus 40 and the first energy processing apparatus 10 as a whole jointly form a current loop with the second energy processing apparatus 20, to implement charging/discharging of the first power battery 1 and the second power battery 2 in the foregoing four states. In the second preset state, the first switch K1 and the fourth switch K4 may be opened, and the second switch K2 may be closed, to enable an external charging device such as a charging pile to simultaneously charge the first power battery 1 and the second power battery 2 separately. In the third preset state, the first switch K1, the second switch K2, and the fourth switch K4 may be opened, to enable three motors in the first energy processing apparatus 10, the second energy processing apparatus 20, and the fourth energy processing apparatus 40 to separately provide drive for the vehicle.

In a possible implementation, the third inverter 31 and the fourth inverter 41 shown in FIG. 3 and FIG. 4 may respectively include three sets of bridge arms. Each of the third motor 32 and the fourth motor 42 may also be a three-phase motor, and includes three motor windings. In addition, in the first preset state, currents in the three motor windings in each of the third motor 32 and the fourth motor 42 are also in a same direction at each moment. Therefore, when the battery self-heating apparatus shown in FIG. 3 and FIG. 4 performs self-heating of the first power battery 1 and the second power battery 2 in the first preset state, a maximum overcurrent capacity of the third motor 32 and the fourth motor 42 may also be fully exerted, to generate more heat, and further improve the battery self-heating efficiency. In addition, when each of the third motor 32 and the fourth motor 42 includes the three motor windings, if the currents are in the same direction, the currents in the three motor windings in each of the motors are equal in magnitude. An electromagnetic force synthesized in the motor is zero in real time, thereby also implementing an output of zero torque. This ensures that the motor remains static in the battery self-heating process without any additional torque control.

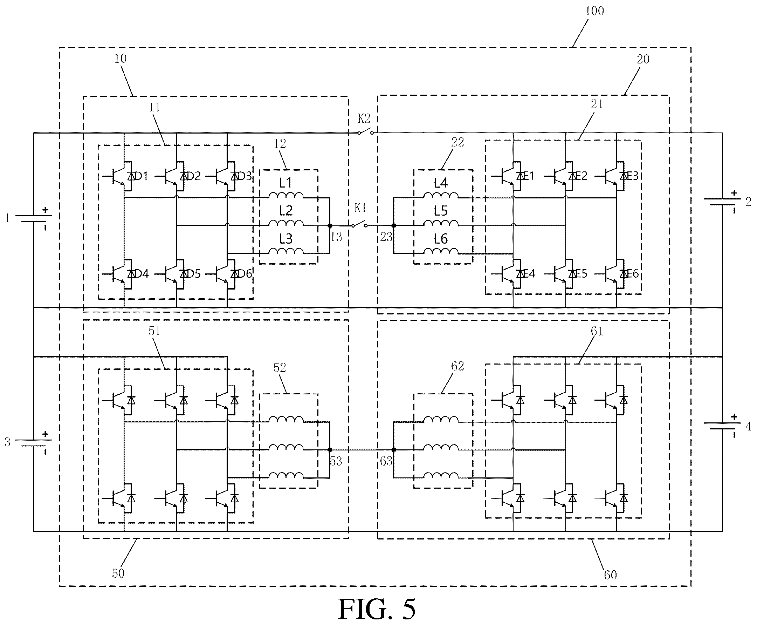

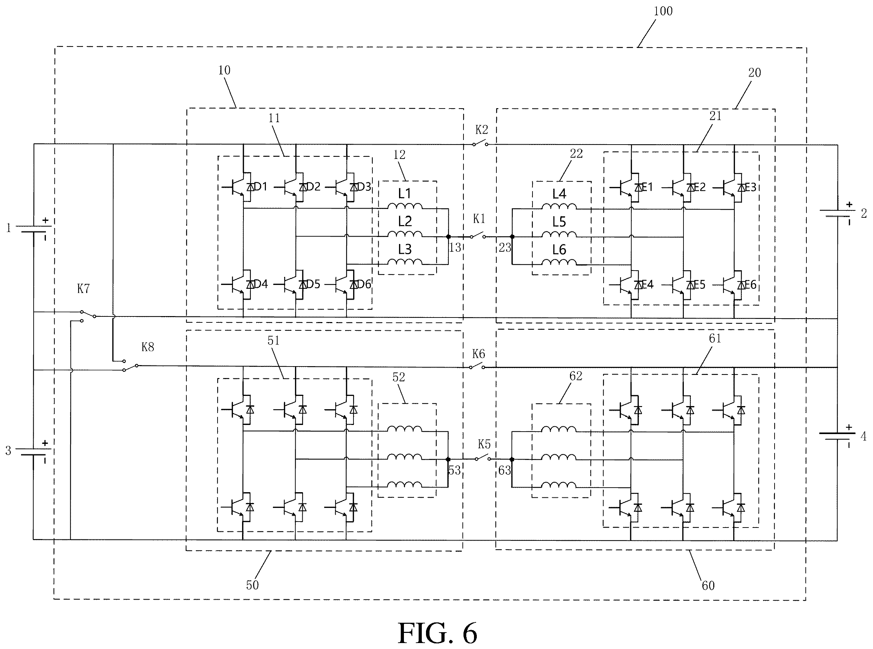

In addition, based on heating the battery in the vehicle by using dual motors and dual electronic controls to implement an oscillation heating circuit, more power batteries, motors, and motor controllers may be further used to further enhance a battery self-heating effect. For example, FIG. 5 and FIG. 6 below show two schematic diagrams of structures of battery self-heating circuits that may be formed when there are four power batteries in the vehicle and there are four motors and four motor controllers.

FIG. 5 is a schematic diagram of a structure of a battery self-heating apparatus according to still another exemplary embodiment of the present invention. As shown in FIG. 5, the apparatus further includes a fifth energy processing apparatus 50 and a sixth energy processing apparatus 60. The fifth energy processing apparatus 50 includes a fifth inverter 51 and a fifth motor 52, and the sixth energy processing apparatus 60 includes a sixth inverter 61 and a sixth motor 62. A first bus terminal of the fifth inverter 51 is connected to the negative electrode of the first power battery 1, the negative electrode of the second power battery 2, a positive electrode of a third power battery 3, a positive electrode of a fourth power battery 4, the second bus terminal of the first inverter 11, and the second bus terminal of the second inverter 21. A second bus terminal of the fifth inverter 51 is connected to a negative electrode of the third power battery 3, a negative electrode of a fourth power battery 4, and a second bus terminal of the sixth inverter 61. A first terminal of the fifth motor 52 is connected to a midpoint of the fifth inverter 51, a first terminal of the sixth motor 62 is connected to a midpoint of the sixth inverter 61, and a second terminal of the fifth motor 52 is jointly connected to form a fifth neutral point 53, and is connected to a sixth neutral point 63 formed by jointly connecting a second terminal of the sixth motor 62. The controller is configured to control the first switch K1 to be closed and control the second switch K2 to be opened in the first preset state, and control connect/disconnect of the first inverter 11, the second inverter 21, the fifth inverter 51, and the sixth inverter 61, to enable the first power battery 1, the second power battery 2, the third power battery 3, and the fourth power battery 4 to be charged/discharged through the first energy processing apparatus 10, the second energy processing apparatus 20, the fifth energy processing apparatus 50, and the sixth energy processing apparatus 60, to implement heating of the first power battery 1, the second power battery 2, the third power battery 3, and the fourth power battery 4.

In the first preset state, in this embodiment, an implementation for implementing battery self-heating is: controlling connect/disconnect of the first inverter 11, the second inverter 21, the third inverter 31, and the fourth inverter 41 in the first preset state, to enable the first power battery 1 and the second power battery 2 to be charged/discharged through the first energy processing apparatus 10 and the second energy processing apparatus 20, and to enable the third power battery 3 and the fourth power battery 4 to be charged/discharged through the fifth energy processing apparatus 50 and the sixth energy processing apparatus 60, to implement heating of the first power battery 1, the second power battery 2, the third power battery 3, and the fourth power battery 4. In other words, the first power battery 1 and the second power battery 2 are used as a charging/discharging group, the third power battery 3 and the fourth power battery 4 are used as a charging/discharging group, and each forms a self-heating apparatus that can perform self-heating on the power battery in the group. A direction and a principle of self-heating currents in each group are the same as those described in the embodiment shown in FIG. 1. This is not described herein again.

In addition, in this case, due to a small space in a battery pack, if there are multiple power batteries in the battery pack, and voltages between the multiple power batteries cannot be balanced, a specific potential difference is generated. Once the potential difference is generated, a current is generated. Because resistance in the battery pack is small, the current generated by the potential difference has a large impact on the battery pack, and the battery pack is prone to be burned out. Therefore, when multiple groups of power batteries are charged/discharged, power batteries belonging to a side may be considered as a whole, and an overall voltage of power batteries on each side may always be ensured to remain stable, to avoid generating the potential difference. For example, in the schematic diagram shown in FIG. 5, the first power battery 1 and the third power battery 3 may be considered as a whole, and the second power battery 2 and the fourth power battery 4 may be considered as a whole. When charging/discharging of each power battery is separately controlled, it is ensured that when the first power battery 1 charges the second power battery 2, the fourth power battery 4 charges the third power battery 3, and when the second power battery 2 charges the first power battery 1, the third power battery 3 charges the fourth power battery 4. Therefore, it may be ensured that a total voltage of the first power battery 1 and the third power battery 3, and a total voltage of the second power battery 2 and the fourth power battery 4 may remain stable. A safety risk of the battery pack caused by the potential difference is reduced.

Based on the schematic diagram of the structure of the battery self-heating apparatus shown in FIG. 5, to further implement functions of battery pack charging and motor driving, a schematic diagram of a structure of a battery self-heating apparatus shown in FIG. 6 is provided.

FIG. 6 is a schematic diagram of a structure of a battery self-heating apparatus according to still another exemplary embodiment of the present invention. As shown in FIG. 6, the apparatus further includes a fifth switch K5, a sixth switch K6, a seventh switch K7, and an eighth switch K8. The fifth switch K5 is connected between the fifth neutral point 53 and the sixth neutral point 63, and when the fifth switch K5 is closed, the fifth neutral point 53 is connected to the sixth neutral point 63. A first terminal of the sixth switch K6 is connected to a first bus terminal of the fifth inverter 51 and a first terminal of the eighth switch K8, a second terminal of the sixth switch K6 is connected to a first bus terminal of the sixth inverter 61, the second bus terminal of the second inverter 21, the second bus terminal of the first inverter 11, the negative electrode of the second power battery 2, the positive electrode of the fourth power battery 4, and a first terminal of the seventh switch K7, and when the sixth switch K6 is closed, the first terminal of the sixth switch K6 is connected to the second terminal of the sixth switch K6. A second terminal of the seventh switch K7 is connected to the second bus terminal of the fifth inverter 51, the second bus terminal of the sixth inverter 61, the negative electrode of the third power battery 3, and the negative electrode of the fourth power battery 4. A third terminal of the seventh switch K7 is connected to the negative electrode of the first power battery 1, the positive electrode of the third power battery 3, and a second terminal of the eighth switch K8. A third terminal of the eighth switch K8 is connected to the first bus terminal of the first inverter 11, the second switch K2, and the positive electrode of the first power battery 1.

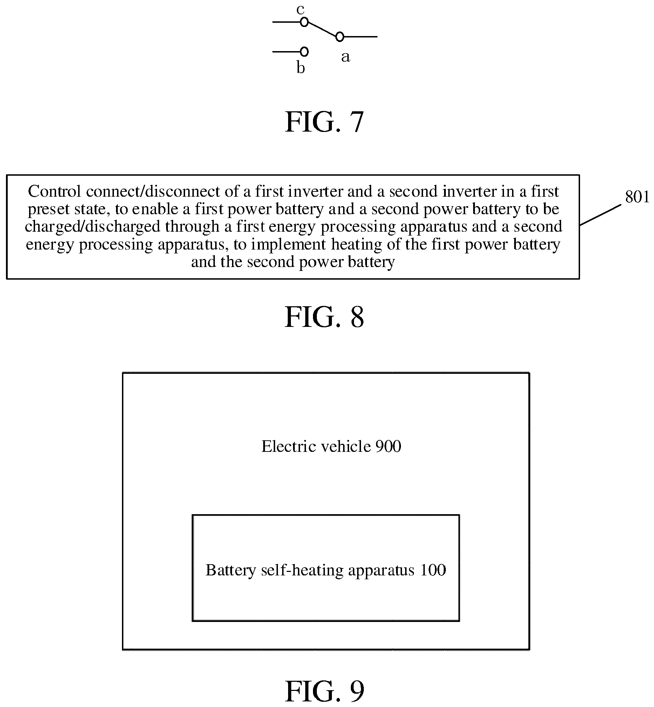

Terminal points of the seventh switch K7 and the eighth switch K8 are sorted as shown in FIG. 7, and are determined as a first terminal a, a second terminal b, and a third terminal c in clockwise order.

According to the schematic diagram of the structure shown in FIG. 5, in the first preset state, the controller in FIG. 6 should control the first switch K1 and the fifth switch K5 to be closed, control the second switch K2 and the sixth switch K6 to be opened, control the first terminal of the seventh switch K7 to be connected to the third terminal of the seventh switch K7, and control the first terminal of the eighth switch K8 to be connected to the second terminal of the eighth switch K8. In this way, connect/disconnect of the first inverter 11, the second inverter 21, the fifth inverter 51, and the sixth inverter 61 is controlled, to implement heating of the first power battery 1, the second power battery 2, the third power battery 3, and the fourth power battery 4.

In addition, the controller in FIG. 6 is further configured to control the first switch K1 and the fifth switch K5 to be opened, and control the second switch K2 and the sixth switch K6 to be closed in the second preset state, control the first terminal of the seventh switch K7 to be connected to the second terminal of the seventh switch K7, and control the first terminal of the eighth switch K8 to be connected to the third terminal of the eighth switch K8, to enable the external power supply to charge the first power battery 1, the second power battery 2, the third power battery 3, and the fourth power battery 4.

In addition, when the first motor 12, the second motor 22, the third motor 32, and the fourth motor 42 that are shown in FIG. 6 respectively are drive motors in a vehicle, the controller in FIG. 6 is further configured to control the first switch K1, the second switch K2, and the fifth switch K5, and the sixth switch K6 to be opened in a third preset state, control the first terminal of the seventh switch K7 to be connected to the third terminal of the seventh switch K7, and control the first terminal of the eighth switch K8 to be connected to the second terminal of the eighth switch K8, to enable the first power battery 1, the second power battery 2, the third power battery 3, and the fourth power battery 4 to drive the vehicle through the first motor 12, the second motor 22, the third motor 32, and the fourth motor 42 respectively.

In a possible implementation, the fifth inverter 51 and the sixth inverter 61 shown in FIG. 5 and FIG. 6 may also respectively include three sets of bridge arms. Each of the fifth motor 52 and the sixth motor 62 may also be a three-phase motor, and includes three motor windings. In addition, in the first preset state, currents in the three motor windings in each of the fifth motor 52 and the sixth motor 62 are also in a same direction at each moment. Therefore, when the battery self-heating apparatus shown in FIG. 5 and FIG. 6 performs self-heating of the first power battery 1 and the second power battery 2 in the first preset state, a maximum overcurrent capacity of the fifth motor 52 and the sixth motor 62 may also be fully exerted, to generate more heat, and further improve the battery self-heating efficiency. In addition, when each of the fifth motor 52 and the sixth motor 62 includes three motor windings, if the currents are in the same direction, the currents in the three motor windings in each of the motors are equal in magnitude. An electromagnetic force synthesized in the motor is zero in real time, thereby also implementing an output of zero torque. This also ensures that the motor remains static in the battery self-heating process without any additional torque control.

FIG. 8 is a flowchart of a battery self-heating method according to an exemplary embodiment of the present invention. As shown in FIG. 8, the method includes step 801.

In step 801, connect/disconnect of the first inverter 11 and the second inverter 21 is controlled in a first preset state, to enable the first power battery 1 and the second power battery 2 to be charged/discharged through the first energy processing apparatus 10 and the second energy processing apparatus 20, to implement heating of the first power battery 1 and the second power battery 2. The first energy processing apparatus 10 includes a first inverter 11 and a first motor 12, and the second energy processing apparatus 20 includes a second inverter 21 and a second motor 22. A first bus terminal of the first inverter 11 is connected to a positive electrode of a first power battery 1, a second bus terminal of the first inverter 11 is connected to a negative electrode of the first power battery 1, a negative electrode of a second power battery 2, and a second bus terminal of the second inverter 21. A first terminal of the first motor 12 is connected to a midpoint of the first inverter 11, a first terminal of the second motor 22 is connected to a midpoint of the second inverter 21, and a second terminal of the first motor 12 is jointly connected to form a first neutral point 13, and the first neutral point 13 is connected to a second neutral point 23 formed by jointly connecting a second terminal of the second motor 22, through a neutral line.

Through the foregoing technical solution, a battery self-heating apparatus that performs low-frequency oscillation heating by using dual motors and dual electric controls is provided, which may fully use characteristics that some electric vehicles such as a four-wheel drive electric vehicle have the dual motors and the dual electric controls. By connecting the dual motors through the neutral line, self-heating efficiency and a power of the power battery are greatly improved, and a lower cost is ensured.

In a possible implementation, the method further includes: controlling the first switch K1 to be closed in the first preset state. The first switch K1 is connected between the first neutral point 13 and the second neutral point 23, and when the first switch K1 is closed, the first neutral point 13 is connected to the second neutral point 23.

In a possible implementation, the method further includes: controlling the first switch K1 to be opened and controlling the second switch K2 to be closed in a second preset state, to enable an external power supply to charge the first power battery 1 and the second power battery 2. The second switch K2 is connected to the positive electrode of the first power battery 1, a positive electrode of the second power battery 2, the first bus terminal of the first inverter 11, and a first bus terminal of the second inverter 21, and when the second switch K2 is closed, the positive electrode of the first power battery 1, the positive electrode of the second power battery 2, the first bus terminal of the first inverter 11, and the first bus terminal of the second inverter 21 are closed.

In a possible implementation, the method further includes: controlling an upper bridge arm of the first inverter 11 and a lower bridge arm of the second inverter 21 to be simultaneously closed in the first preset state, or controlling a lower bridge arm of the first inverter 11 and an upper bridge arm of the second inverter 21 to be simultaneously closed, to enable the first power battery 1 and the second power battery 2 to be charged/discharged through the first energy processing apparatus 10 and the second energy processing apparatus 20, to implement heating of the first power battery 1 and the second power battery 2.

In a possible implementation, the method further includes: controlling the first switch K1 and the third switch K3 to be closed and the second switch K2 to be opened in the first preset state, and controlling connect/disconnect of the first inverter 11, the second inverter 21, and the third inverter 31, to enable the first power battery 1 and the second power battery 2 to be charged/discharged through the first energy processing apparatus 10, the second energy processing apparatus 20, and the third energy processing apparatus 30, to implement heating of the first power battery 1 and the second power battery 2. The third energy processing apparatus 30 includes a third inverter 31 and a third motor 32, a first bus terminal of the third inverter 31 is connected to the positive electrode of the second power battery 2, the first bus terminal of the second inverter 21, and the second switch K2, and a second bus terminal of the third inverter 31 is connected to the negative electrode of the first power battery 1, the negative electrode of the second power battery 2, the second bus terminal of the first inverter 11, and the second bus terminal of the second inverter 21, a first terminal of the third motor 32 is connected to a midpoint of the third inverter 31, a second terminal of the third motor 32 is jointly connected to form a third neutral point 33, and the third neutral point 33 is connected to the first switch K1 and the second neutral point 23 through the third switch K3.

In a possible implementation, the method further includes: controlling the first switch K1 and the fourth switch K4 to be closed and controlling the second switch K2 to be opened in the first preset state, and controlling connect/disconnect of the first inverter 11, the second inverter 21, and the fourth inverter 41, to enable the first power battery 1 and the second power battery 2 to be charged/discharged through the first energy processing apparatus 10, the second energy processing apparatus 20, and the fourth energy processing apparatus 40, to implement heating of the first power battery 1 and the second power battery 2. The fourth energy processing apparatus 40 includes a fourth inverter 41 and a fourth motor 42, a first bus terminal of the fourth inverter 41 is connected to the positive electrode of the first power battery 1, the first bus terminal of the first inverter 11, and the second switch K2, a second bus terminal of the fourth inverter 41 is connected to the negative electrode of the first power battery 1, the negative electrode of the second power battery 2, the second bus terminal of the first inverter 11, and the second bus terminal of the second inverter 21, a first terminal of the fourth motor 42 is connected to a midpoint of the fourth inverter 41, a second terminal of the fourth motor 42 is jointly connected to form a fourth neutral point 43, and the fourth neutral point 43 is connected to the first switch K1 and the first neutral point 13 through the fourth switch K4.

In a possible implementation, the method further includes: controlling the first switch K1 to be closed and controlling the second switch K2 to be opened in the first preset state, and controlling connect/disconnect of the first inverter 11, the second inverter 21, the fifth inverter 51, and the sixth inverter 61, to enable the first power battery 1, the second power battery 2, the third power battery 3, and the fourth power battery 4 to be charged/discharged through the first energy processing apparatus 10, the second energy processing apparatus 20, the fifth energy processing apparatus 50, and the sixth energy processing apparatus 60, to implement heating of the first power battery 1, the second power battery 2, the third power battery 3, and the fourth power battery 4. The fifth energy processing apparatus 50 includes a fifth inverter 51 and a fifth motor 52, and the sixth energy processing apparatus 60 includes a sixth inverter 61 and a sixth motor 62. A first bus terminal of the fifth inverter 51 is connected to the negative electrode of the first power battery 1, the negative electrode of the second power battery 2, a positive electrode of a third power battery 3, a positive electrode of a fourth power battery 4, the second bus terminal of the first inverter 11, and the second bus terminal of the second inverter 21. A second bus terminal of the fifth inverter 51 is connected to a negative electrode of the third power battery 3, a negative electrode of a fourth power battery 4, and a second bus terminal of the sixth inverter 61. A first terminal of the fifth motor 52 is connected to a midpoint of the fifth inverter 51, a first terminal of the sixth motor 62 is connected to a midpoint of the sixth inverter 61, and a second terminal of the fifth motor 52 is jointly connected to form a fifth neutral point 53, and is connected to a sixth neutral point 63 formed by jointly connecting a second terminal of the sixth motor 62.

In a possible implementation, the method further includes: controlling the first switch K1 and the fifth switch K5 to be opened, and controlling the second switch K2 and the sixth switch K6 to be closed in the second preset state, controlling the first terminal of the seventh switch K7 to be connected to the second terminal of the seventh switch K7, and controlling the first terminal of the eighth switch K8 to be connected to the third terminal of the eighth switch K8, to enable the external power supply to charge the first power battery 1, the second power battery 2, the third power battery 3, and the fourth power battery 4. The fifth switch K5 is connected between the fifth neutral point 53 and the sixth neutral point 63, and when the fifth switch K5 is closed, the fifth neutral point 53 is connected to the sixth neutral point 63. A first terminal of the sixth switch K6 is connected to a first bus terminal of the fifth inverter 51 and a first terminal of the eighth switch K8, a second terminal of the sixth switch K6 is connected to a first bus terminal of the sixth inverter 61, the second bus terminal of the second inverter 21, the second bus terminal of the first inverter 11, the negative electrode of the second power battery 2, the positive electrode of the fourth power battery 4, and a first terminal of the seventh switch K7, and when the sixth switch K6 is closed, the first terminal of the sixth switch K6 is connected to the second terminal of the sixth switch K6. A second terminal of the seventh switch K7 is connected to the second bus terminal of the fifth inverter 51, the second bus terminal of the sixth inverter 61, the negative electrode of the third power battery 3, and the negative electrode of the fourth power battery 4. A third terminal of the seventh switch K7 is connected to the negative electrode of the first power battery 1, the positive electrode of the third power battery 3, and a second terminal of the eighth switch K8. A third terminal of the eighth switch K8 is connected to the first bus terminal of the first inverter 11, the second switch K2, and the positive electrode of the first power battery 1.

In a possible implementation, the method further includes: controlling connect/disconnect of the first inverter 11, the second inverter 21, the third inverter 31, and the fourth inverter 41 in the first preset state, to enable the first power battery 1 and the second power battery 2 to be charged/discharged through the first energy processing apparatus 10 and the second energy processing apparatus 20, and to enable the third power battery 3 and the fourth power battery 4 to be charged/discharged through the fifth energy processing apparatus 50 and the sixth energy processing apparatus 60, to implement heating of the first power battery 1, the second power battery 2, the third power battery 3, and the fourth power battery 4. When the first power battery 1 charges the second power battery 2, the fourth power battery 4 charges the third power battery 3, and when the second power battery 2 charges the first power battery 1, the third power battery 3 charges the fourth power battery 4.

In a possible implementation, the method further includes: controlling the first switch K1, the second switch K2, the fifth switch K5, and the sixth K6 switch to be opened in a third preset state, controlling the first terminal of the seventh switch K7 to be connected to the third terminal of the seventh switch K7, and controlling the first terminal of the eighth switch K8 to be connected to the second terminal of the eighth switch K8, to enable the first power battery 1, the second power battery 2, the third power battery 3, and the fourth power battery 4 to drive the vehicle through the first motor 12, the second motor 22, the third motor 32, and the fourth motor 42 respectively. The first motor 12, the second motor 22, the third motor 32, and the fourth motor 42 are separately drive motors in the vehicle.

In a possible implementation, the first inverter 11, the second inverter 21, the fifth inverter 51, and the sixth inverter 61 respectively include three sets of bridge arms. Each of the first motor 12, the second motor 22, the fifth motor 52, and the sixth motor 62 is a three-phase motor, and includes three motor windings, and in the first preset state, currents in the three motor windings in each of the first motor 12, the second motor 22, the fifth motor 52, and the sixth motor 62 are in a same direction at each moment.

In a possible implementation, the method further includes: exporting, in the first preset state, heat generated by the first power battery and the second power battery to a vehicle passenger compartment through a heat pump to provide a heat source.

FIG. 9 is a structural block diagram of an electric vehicle 900 according to an exemplary embodiment of the present invention. As shown in FIG. 9, the electric vehicle 900 includes the battery self-heating apparatus 100. The controller in the battery self-heating apparatus 100 may be further configured to perform all or part of steps in the battery self-heating method. A person skilled in the art should know that during specific implementation, the vehicle 900 further includes other components. FIG. 9 shows only parts related to embodiments of the present invention, and other necessary vehicle components are not shown one by one.

The preferred implementations of the present invention are described above in detail with reference to the accompanying drawings, but the present invention is not limited to the specific details in the above implementations. Various simple variations may be made to the technical solutions of the present invention within the scope of the technical idea of the present invention, and such simple variations shall all fall within the protection scope of the present invention.

It should be additionally noted that, the specific technical features described in the foregoing specific implementations may be combined in any proper manner in a case without conflict. To avoid unnecessary repetition, various possible combination manners are not described in the present invention.

In addition, different implementations of the present invention may also be arbitrarily combined without departing from the idea of the present invention, and these combinations shall still be considered as content disclosed in the present invention.

Descriptions of reference numerals:
1 First power battery 2 second power battery
3 third power battery 4 fourth power battery
10 first energy processing apparatus 20 second energy processing apparatus
30 third energy processing apparatus 40 fourth energy processing apparatus
50 fifth energy processing apparatus 60 sixth energy processing apparatus
11 first inverter 21 second inverter
31 third inverter 41 fourth inverter
51 fifth inverter 61 sixth inverter
12 first motor 22 second motor
32 third motor 42 fourth motor
52 fifth motor 62 sixth motor
13 first neutral point 23 second neutral point
33 third neutral point 43 fourth neutral point
53 fifth neutral point 63 sixth neutral point
K1 first switch K2 second switch
K3 third switch K4 fourth switch
K5 fifth switch K6 sixth switch
K7 seventh switch K8 eighth switch
100 battery self-heating apparatus 900 vehicle

## Claims

1. A battery self-heating apparatus, comprising a first energy processing apparatus (10), a second energy processing apparatus (20), and a controller connected to each other, and further comprising a first switch (K1) wherein
the first energy processing apparatus comprises a first inverter (11) and a first motor (12), and the second energy processing apparatus (20) comprises a second inverter (21) and a second motor (22);
a first bus terminal of the first inverter (11) is connected to a positive electrode of a first power battery (1), a second bus terminal of the first inverter (11) is connected to a negative electrode of the first power battery (1), a negative electrode of a second power battery (2), and a second bus terminal of the second inverter (21);
a first terminal of the first motor (12) is connected to a midpoint of the first inverter (11), a first terminal of the second motor (22) is connected to a midpoint of the second inverter (21), and a second terminal of the first motor (12) is jointly connected to form a first neutral point (13), and the first neutral point (13) is connected to a second neutral point (23) , formed by jointly connecting a second terminal of the second motor (22), through a neutral line;
the first switch (K1) is connected between the first neutral point (13) and the second neutral point (23), and when the first switch (K1) is closed, the first neutral point (13) being connected to the second neutral point (23); and
the controller is configured to control the first switch (K1) to be closed in a first preset state, and control connect/disconnect of the first inverter (11) and the second inverter (21) in the first preset state, to enable the first power battery (1) and the second power battery (2) to be charged/discharged through the first energy processing apparatus (10) and the second energy processing apparatus (20), to implement heating of the first power battery (1) and the second power battery (2);
**characterized in that** the apparatus further comprises a second switch (K2), the second switch (K2) being connected to the positive electrode of the first power battery (1), a positive electrode of the second power battery (2), the first bus terminal of the first inverter (11), and a first bus terminal of the second inverter (21), and when the second switch (K2) is closed, the positive electrode of the first power battery (1), the positive electrode of the second power battery (2), the first bus terminal of the first inverter (11), and the first bus terminal of the second inverter (21) being connected; and
the controller is further configured to control the first switch (K1) to be opened and control the second switch (K2) to be closed in a second preset state, to enable an external power supply to charge the first power battery (1) and the second power battery (2) separately as independent battery packs.

2. The apparatus according to claim 1, wherein
the controller is configured to control an upper bridge arm (D1, D2, D3) of the first inverter (11) and a lower bridge arm (E4, E5, E6) of the second inverter (21) to be simultaneously closed in the first preset state, or control a lower bridge arm (D4, D5, D6)) of the first inverter (11) and an upper bridge arm (E1, E2, E3) of the second inverter (21) to be simultaneously closed, to enable the first power battery (1) and the second power battery (2) to be charged/discharged through the first energy processing apparatus (10) and the second energy processing apparatus (20), to implement heating of the first power battery (1) and the second power battery (2).

3. The apparatus according to any one of the previous claims, further comprising a third energy processing apparatus (30) and a third switch (K3);
wherein the third energy processing apparatus (30) comprises a third inverter (31) and a third motor (32), a first bus terminal of the third inverter (31) is connected to the positive electrode of the second power battery (2), the first bus terminal of the second inverter (21), and the second switch (K2), and a second bus terminal of the third inverter (31) is connected to the negative electrode of the first power battery (1), the negative electrode of the second power battery (2), the second bus terminal of the first inverter (11), and the second bus terminal of the second inverter (21);
a first terminal of the third motor (32) is connected to a midpoint of the third inverter (31), a second terminal of the third motor (32) is jointly connected to form a third neutral point (33), and the third neutral point (33) is connected to the first switch (K1) and the second neutral point (23) through the third switch (K3); and
the controller is configured to control the first switch (K1) and the third switch (K3) to be closed and control the second switch (K2) to be opened in the first preset state, and control connect/disconnect of the first inverter (11), the second inverter (21), and the third inverter (31), to enable the first power battery (1) and the second power battery (2) to be charged/discharged through the first energy processing apparatus (10), the second energy processing apparatus (20), and the third energy processing apparatus (30), to implement heating of the first power battery (1) and the second power battery (2).

4. The apparatus according to any one of the previous claims, further comprising a fourth energy processing apparatus (40) and a fourth switch (K4), wherein
the fourth energy processing apparatus (40) comprises a fourth inverter (41) and a fourth motor (42), a first bus terminal of the fourth inverter (41) is connected to the positive electrode of the first power battery (1), the first bus terminal of the first inverter (11), and the second switch (K2), and a second bus terminal of the fourth inverter (41) is connected to the negative electrode of the first power battery (1), the negative electrode of the second power battery (2), the second bus terminal of the first inverter (11), and the second bus terminal of the second inverter (21);
a first terminal of the fourth motor (42) is connected to a midpoint of the fourth inverter (41), a second terminal of the fourth motor (42) is jointly connected to form a fourth neutral point (43), and the fourth neutral point (43) is connected to the first switch (K1) and the first neutral point (13) through the fourth switch (K4); and
the controller is configured to control the first switch (K1) and the fourth switch (K4) to be closed and control the second switch (K2) to be opened in the first preset state, and control connect/disconnect of the first inverter (11), the second inverter (21), and the fourth inverter (41), to enable the first power battery (1) and the second power battery (2) to be charged/discharged through the first energy processing apparatus (10), the second energy processing apparatus (20), and the fourth energy processing apparatus (40), to implement heating of the first power battery (1) and the second power battery (2).

5. The apparatus according to any one of the previous claims, further comprising a fifth energy processing apparatus (50) and a sixth energy processing apparatus (60);
wherein the fifth energy processing apparatus (50) comprises a fifth inverter (51) and a fifth motor (52), and the sixth energy processing apparatus (60) comprises a sixth inverter (61) and a sixth motor (62);
a first bus terminal of the fifth inverter (51) is connected to the negative electrode of the first power battery (1), the negative electrode of the second power battery (2), a positive electrode of a third power battery (3), a positive electrode of a fourth power battery (4), the second bus terminal of the first inverter (11), and the second bus terminal of the second inverter (21);
a second bus terminal of the fifth inverter (51) is connected to a negative electrode of the third power battery (3), a negative electrode of a fourth power battery (4), and a second bus terminal of the sixth inverter (61);
a first terminal of the fifth motor (52) is connected to a midpoint of the fifth inverter (51), a first terminal of the sixth motor (62) is connected to a midpoint of the sixth inverter (61), and a second terminal of the fifth motor (52) is jointly connected to form a fifth neutral point (53), and is connected to a sixth neutral point (63) formed by jointly connecting a second terminal of the sixth motor (62); and
the controller is configured to control the first switch (K1) to be closed and control the second switch (K2) to be opened in the first preset state, and control connect/disconnect of the first inverter (11), the second inverter (21), the fifth inverter (51), and the sixth inverter (61), to enable the first power battery (1), the second power battery (2), the third power battery (3), and the fourth power battery (4) to be charged/discharged through the first energy processing apparatus (10), the second energy processing apparatus (20), the fifth energy processing apparatus (50), and the sixth energy processing apparatus (60), to implement heating of the first power battery (1), the second power battery (2), the third power battery (3), and the fourth power battery (4).

6. The apparatus according to claim 5, further comprising a fifth switch (K5), a sixth switch (K6), a seventh switch (K7), and an eighth switch (K8);
wherein the fifth switch (K5) is connected between the fifth neutral point (53) and the sixth neutral point (63), and when the fifth switch (K5) is closed, the fifth neutral point (53) is connected to the sixth neutral point (63);
a first terminal of the sixth switch (K6) is connected to the first bus terminal of the fifth inverter (51) and a first terminal of the eighth switch (K8), a second terminal of the sixth switch (K6) is connected to a first bus terminal of the sixth inverter (61), the second bus terminal of the second inverter (21), the second bus terminal of the first inverter (11), the negative electrode of the second power battery (2), the positive electrode of the fourth power battery (4), and a first terminal of the seventh switch (K7), and when the sixth switch (K6) is closed, the first terminal of the sixth switch (K6) is connected to the second terminal of the sixth switch (K6);
a second terminal of the seventh switch (K7) is connected to the second bus terminal of the fifth inverter (51), the second bus terminal of the sixth inverter (61), the negative electrode of the third power battery (3), and the negative electrode of the fourth power battery (4); a third terminal of the seventh switch (K7) is connected to the negative electrode of the first power battery (1), the positive electrode of the third power battery (3), and a second terminal of the eighth switch (K8);
a third terminal of the eighth switch (K8) is connected to the first bus terminal of the first inverter (11), the second switch (K2), and the positive electrode of the first power battery (1); and
the controller is configured to control the first switch (K1) and the fifth switch (K5) to be opened, and control the second switch (K2) and the sixth switch (K6) to be closed in the second preset state, control the first terminal of the seventh switch (K7) to be connected to the second terminal of the seventh switch (K7), and control the first terminal of the eighth switch (K8) to be connected to the third terminal of the eighth switch (K8), to enable the external power supply to charge the first power battery (1), the second power battery (2), the third power battery (3), and the fourth power battery (4), the first power battery (1) and the third power battery (3) being considered as a whole and the second battery (2) and the fourth power battery (4) being considered as a whole.

7. The apparatus according to claim 5 or 6, wherein
the controller is further configured to control the fifth switch (K5) to be closed, and control the sixth switch (K6) to be opened, control the first terminal of the seventh switch (K7) to be connected to the third terminal of the seventh switch (K7), and control the first terminal of the eighth switch (K8) to be connected to the second terminal of the eighth switch (K8), and control connect/disconnect of the first inverter (11), the second inverter (21), the third inverter (31), and the fourth inverter (41) in the first preset state, to enable the first power battery (1) and the second power battery (2) to be charged/discharged through the first energy processing apparatus (10) and the second energy processing apparatus (20), and to enable the third power battery (3) and the fourth power battery (4) to be charged/discharged through the fifth energy processing apparatus (50) and the sixth energy processing apparatus (60), to implement heating of the first power battery (1), the second power battery (2), the third power battery (3), and the fourth power battery (4), wherein
when the first power battery (1) charges the second power battery (2), the fourth power battery (4) charges the third power battery (3), and when the second power battery (2) charges the first power battery (1), the third power battery (3) charges the fourth power battery (4).

8. The apparatus according to claims 3 and 6, optionally in combination with any of claims 6, 7, or 9, wherein the first motor (1), the second motor (2), the third motor (3), and the fourth motor (4) respectively are drive motors in a vehicle;
wherein the controller is configured to control the first switch (K1), the second switch (K2), the fifth switch (K5), and the sixth switch (K6) to be opened in a third preset state, control the first terminal of the seventh switch (K7) to be connected to the third terminal of the seventh switch (K7), and control the first terminal of the eighth switch (K8) to be connected to the second terminal of the eighth switch (K8), to enable the first power battery (1), the second power battery (2), the third power battery (3), and the fourth power battery (4) to drive the vehicle through the first motor (12), the second motor (22), the third motor (32), and the fourth motor (42) respectively.

9. The apparatus according to any one of claims 5-8, wherein the first inverter (11), the second inverter (21), the fifth inverter (51), and the sixth inverter (61) respectively comprise three sets of bridge arms; and each of the first motor (12), the second motor (22), the fifth motor (52), and the sixth motor (62) is a three-phase motor, and comprises three motor windings (L1, L2, L3, L4, L5, L6), and in the first preset state, currents in the three motor windings (L1, L2, L3, L4, L5, L6) in each of the first motor (12), the second motor (22), the third motor (32), and the fourth motor (42) are in a same direction at each moment.

10. The apparatus according to any one of the previous claims, wherein
the controller is configured to export, in the first preset state, heat generated by the first power battery (1) and the second power battery (2) to a vehicle passenger compartment through a heat pump to provide a heat source.

11. A battery self-heating method applied to the apparatus of claim 1, comprising:
controlling (801) a first switch to be closed in a first preset state, and controlling connect/disconnect of a first inverter and a second inverter in the first preset state, to enable a first power battery and a second power battery to be charged/discharged through a first energy processing apparatus and a second energy processing apparatus, to implement heating of the first power battery and the second power battery, and
controlling the first switch to be opened, and controlling a second switch to be closed in a second preset state, to enable an external power supply to charge the first power battery and the second power battery separately as independent battery packs, wherein
the first energy processing apparatus comprises the first inverter and a first motor, and the second energy processing apparatus comprises the second inverter and a second motor;
a first bus terminal of the first inverter is connected to a positive electrode of the first power battery, and a second bus terminal of the first inverter is connected to a negative electrode of the first power battery, a negative electrode of the second power battery, and a second bus terminal of the second inverter;
a first terminal of the first motor is connected to a midpoint of the first inverter, a first terminal of the second motor is connected to a midpoint of the second inverter, and a second terminal of the first motor is jointly connected to form a first neutral point, and is connected to, a second neutral point formed by jointly connecting a second terminal of the second motor, through a neutral line;
the first switch is connected between the first neutral point and the second neutral point, and when the first switch is closed, the first neutral is connected to the second neutral point;
the second switch is connected to the positive electrode of the first power battery, a positive electrode of the second power battery, the first bus terminal of the first inverter, and a first bus terminal of the second inverter, and when the second switch is closed, the positive electrode of the first power battery, the positive electrode of the second power battery, the first bus terminal of the first inverter, and the first bus terminal of the second inverter are connected.

12. An electric vehicle, comprising the battery self-heating apparatus according to any one of claims 1 to 10.

## Patentansprüche

1. Batterie-Selbsterwärmungseinrichtung, umfassend eine erste Energieverarbeitungseinrichtung (10), eine zweite Energieverarbeitungseinrichtung (20) und eine Steuerung, die miteinander verbunden sind, und ferner umfassend einen ersten Schalter (K1), wobei
die erste Energieverarbeitungseinrichtung einen ersten Umrichter (11) und einen ersten Motor (12) umfasst, und die zweite Energieverarbeitungseinrichtung (20) einen zweiten Umrichter (21) und einen zweiten Motor (22) umfasst;
ein erster Busanschluss des ersten Umrichters (11) mit einer positiven Elektrode einer ersten Leistungsbatterie (1) verbunden ist, ein zweiter Busanschluss des ersten Umrichters (11) mit einer negativen Elektrode der ersten Leistungsbatterie (1), einer negativen Elektrode einer zweiten Leistungsbatterie (2) und einem zweiten Busanschluss des zweiten Umrichters (21) verbunden ist;
ein erster Anschluss des ersten Motors (12) mit einem Mittelpunkt des ersten Umrichters (11) verbunden ist, ein erster Anschluss des zweiten Motors (22) mit einem Mittelpunkt des zweiten Umrichters (21) verbunden ist, und ein zweiter Anschluss des ersten Motors (12) gemeinsam verbunden ist, um einen ersten Neutralpunkt (13) zu bilden, und der erste Neutralpunkt (13) mit einem zweiten Neutralpunkt (23), der durch gemeinsames Verbinden eines zweiten Anschlusses des zweiten Motors (22) gebildet wird, über einen Neutralleiter verbunden ist;
der erste Schalter (K1) zwischen dem ersten Neutralpunkt (13) und dem zweiten Neutralpunkt (23) verbunden ist, und wenn der erste Schalter (K1) geschlossen ist, der erste Neutralpunkt (13) mit dem zweiten Neutralpunkt (23) verbunden ist; und
die Steuerung konfiguriert ist, um den ersten Schalter (K1) so zu steuern, dass er in einem ersten voreingestellten Zustand geschlossen ist, und ein Verbinden/Trennen des ersten Umrichters (11) und des zweiten Umrichters (21) in dem ersten voreingestellten Zustand zu steuern, um zu ermöglichen, dass die erste Leistungsbatterie (1) und die zweite Leistungsbatterie (2) über die erste Energieverarbeitungseinrichtung (10) und die zweite Energieverarbeitungseinrichtung (20) geladen/entladen werden, um ein Erwärmen der ersten Leistungsbatterie (1) und der zweiten Leistungsbatterie (2) zu implementieren;
**dadurch gekennzeichnet, dass** die Einrichtung ferner einen zweiten Schalter (K2) umfasst, wobei der zweite Schalter (K2) mit der positiven Elektrode der ersten Leistungsbatterie (1), einer positiven Elektrode der zweiten Leistungsbatterie (2), dem ersten Busanschluss des ersten Umrichters (11) und einem ersten Busanschluss des zweiten Umrichters (21) verbunden ist, und wenn der zweite Schalter (K2) geschlossen ist, die positive Elektrode der ersten Leistungsbatterie (1), die positive Elektrode der zweiten Leistungsbatterie (2), der erste Busanschluss des ersten Umrichters (11) und der erste Busanschluss des zweiten Umrichters (21) verbunden sind; und
die Steuerung ferner konfiguriert ist, um den ersten Schalter (K1) so zu steuern, dass er geöffnet ist, und den zweiten Schalter (K2) so zu steuern, dass er in einem zweiten voreingestellten Zustand geschlossen ist, um zu ermöglichen, dass eine externe Leistungsversorgung die erste Leistungsbatterie (1) und die zweite Leistungsbatterie (2) separat als unabhängige Batteriepacks lädt.

2. Einrichtung nach Anspruch 1, wobei
die Steuerung konfiguriert ist, um einen oberen Brückenzweig (D1, D2, D3) des ersten Umrichters (11) und einen unteren Brückenzweig (E4, E5, E6) des zweiten Umrichters (21) so zu steuern, dass sie in dem ersten voreingestellten Zustand gleichzeitig geschlossen sind, oder einen unteren Brückenzweig (D4, D5, D6) des ersten Umrichters (11) und einen oberen Brückenzweig (E1, E2, E3) des zweiten Umrichters (21) so zu steuern, dass sie gleichzeitig geschlossen sind, um zu ermöglichen, dass die erste Leistungsbatterie (1) und die zweite Leistungsbatterie (2) über die erste Energieverarbeitungseinrichtung (10) und die zweite Energieverarbeitungseinrichtung (20) geladen/entladen werden, um das Erwärmen der ersten Leistungsbatterie (1) und der zweiten Leistungsbatterie (2) zu implementieren.

3. Einrichtung nach einem der vorstehenden Ansprüche, ferner umfassend eine dritte Energieverarbeitungseinrichtung (30) und einen dritten Schalter (K3);
wobei die dritte Energieverarbeitungseinrichtung (30) einen dritten Umrichter (31) und einen dritten Motor (32) umfasst, ein erster Busanschluss des dritten Umrichters (31) mit der positiven Elektrode der zweiten Leistungsbatterie (2), dem ersten Busanschluss des zweiten Umrichters (21) und dem zweiten Schalter (K2) verbunden ist, und ein zweiter Busanschluss des dritten Umrichters (31) mit der negativen Elektrode der ersten Leistungsbatterie (1), der negativen Elektrode der zweiten Leistungsbatterie (2), dem zweiten Busanschluss des ersten Umrichters (11) und dem zweiten Busanschluss des zweiten Umrichters (21) verbunden ist;
ein erster Anschluss des dritten Motors (32) mit einem Mittelpunkt des dritten Umrichters (31) verbunden ist, ein zweiter Anschluss des dritten Motors (32) gemeinsam verbunden ist, um einen dritten Neutralpunkt (33) zu bilden, und der dritte Neutralpunkt (33) über den dritten Schalter (K3) mit dem ersten Schalter (K1) und dem zweiten Neutralpunkt (23) verbunden ist; und
die Steuerung konfiguriert ist, um den ersten Schalter (K1) und den dritten Schalter (K3) so zu steuern, dass sie geschlossen sind, und den zweiten Schalter (K2) so zu steuern, dass er in dem ersten voreingestellten Zustand geöffnet ist, und das Verbinden/Trennen des ersten Umrichters (11), des zweiten Umrichters (21) und des dritten Umrichters (31) zu steuern, um zu ermöglichen, dass die erste Leistungsbatterie (1) und die zweite Leistungsbatterie (2) über die erste Energieverarbeitungseinrichtung (10), die zweite Energieverarbeitungseinrichtung (20) und die dritte Energieverarbeitungseinrichtung (30) geladen/entladen werden, um das Erwärmen der ersten Leistungsbatterie (1) und der zweiten Leistungsbatterie (2) zu implementieren.

4. Einrichtung nach einem der vorstehenden Ansprüche, ferner umfassend eine vierte Energieverarbeitungseinrichtung (40) und einen vierten Schalter (K4), wobei
die vierte Energieverarbeitungseinrichtung (40) einen vierten Umrichter (41) und einen vierten Motor (42) umfasst, ein erster Busanschluss des vierten Umrichters (41) mit der positiven Elektrode der ersten Leistungsbatterie (1), dem ersten Busanschluss des ersten Umrichters (11) und dem zweiten Schalter (K2) verbunden ist, und ein zweiter Busanschluss des vierten Umrichters (41) mit der negativen Elektrode der ersten Leistungsbatterie (1), der negativen Elektrode der zweiten Leistungsbatterie (2), dem zweiten Busanschluss des ersten Umrichters (11) und dem zweiten Busanschluss des zweiten Umrichters (21) verbunden ist;
ein erster Anschluss des vierten Motors (42) mit einem Mittelpunkt des vierten Umrichters (41) verbunden ist, ein zweiter Anschluss des vierten Motors (42) gemeinsam verbunden ist, um einen vierten Neutralpunkt (43) zu bilden, und der vierte Neutralpunkt (43) über den vierten Schalter (K4) mit dem ersten Schalter (K1) und dem ersten Neutralpunkt (13) verbunden ist; und
die Steuerung konfiguriert ist, um den ersten Schalter (K1) und den vierten Schalter (K4) so zu steuern, dass sie geschlossen sind, und den zweiten Schalter (K2) so zu steuern, dass er in dem ersten voreingestellten Zustand geöffnet ist, und das Verbinden/Trennen des ersten Umrichters (11), des zweiten Umrichters (21) und des vierten Umrichters (41) zu steuern, um zu ermöglichen, dass die erste Leistungsbatterie (1) und die zweite Leistungsbatterie (2) über die erste Energieverarbeitungseinrichtung (10), die zweite Energieverarbeitungseinrichtung (20) und die vierte Energieverarbeitungseinrichtung (40) geladen/entladen werden, um das Erwärmen der ersten Leistungsbatterie (1) und der zweiten Leistungsbatterie (2) zu implementieren.

5. Einrichtung nach einem der vorstehenden Ansprüche, ferner umfassend eine fünfte Energieverarbeitungseinrichtung (50) und eine sechste Energieverarbeitungseinrichtung (60);
wobei die fünfte Energieverarbeitungseinrichtung (50) einen fünften Umrichter (51) und einen fünften Motor (52) umfasst, und die sechste Energieverarbeitungseinrichtung (60) einen sechsten Umrichter (61) und einen sechsten Motor (62) umfasst;
ein erster Busanschluss des fünften Umrichters (51) mit der negativen Elektrode der ersten Leistungsbatterie (1), der negativen Elektrode der zweiten Leistungsbatterie (2), einer positiven Elektrode einer dritten Leistungsbatterie (3), einer positiven Elektrode einer vierten Leistungsbatterie (4), dem zweiten Busanschluss des ersten Umrichters (11) und dem zweiten Busanschluss des zweiten Umrichters (21) verbunden ist;
ein zweiter Busanschluss des fünften Umrichters (51) mit einer negativen Elektrode der dritten Leistungsbatterie (3), einer negativen Elektrode einer vierten Leistungsbatterie (4) und einem zweiten Busanschluss des sechsten Umrichters (61) verbunden ist;
ein erster Anschluss des fünften Motors (52) mit einem Mittelpunkt des fünften Umrichters (51) verbunden ist, ein erster Anschluss des sechsten Motors (62) mit einem Mittelpunkt des sechsten Umrichters (61) verbunden ist, und ein zweiter Anschluss des fünften Motors (52) gemeinsam verbunden ist, um einen fünften Neutralpunkt (53) zu bilden, und mit einem sechsten Neutralpunkt (63) verbunden ist, der durch gemeinsames Verbinden eines zweiten Anschlusses des sechsten Motors (62) gebildet wird; und
die Steuerung konfiguriert ist, um den ersten Schalter (K1) so zu steuern, dass er geschlossen ist, und den zweiten Schalter (K2) so zu steuern, dass er in dem ersten voreingestellten Zustand geöffnet ist, und das Verbinden/Trennen des ersten Umrichters (11), des zweiten Umrichters (21), des fünften Umrichters (51) und des sechsten Umrichters (61) zu steuern, um zu ermöglichen, dass die erste Leistungsbatterie (1), die zweite Leistungsbatterie (2), die dritte Leistungsbatterie (3) und die vierte Leistungsbatterie (4) über die erste Energieverarbeitungseinrichtung (10), die zweite Energieverarbeitungseinrichtung (20), die fünfte Energieverarbeitungseinrichtung (50) und die sechste Energieverarbeitungseinrichtung (60) geladen/entladen werden, um das Erwärmen der ersten Leistungsbatterie (1), der zweiten Leistungsbatterie (2), der dritten Leistungsbatterie (3) und der vierten Leistungsbatterie (4) zu implementieren.

6. Einrichtung nach Anspruch 5, ferner umfassend einen fünften Schalter (K5), einen sechsten Schalter (K6), einen siebten Schalter (K7) und einen achten Schalter (K8);
wobei der fünfte Schalter (K5) zwischen dem fünften Neutralpunkt (53) und dem sechsten Neutralpunkt (63) verbunden ist, und wenn der fünfte Schalter (K5) geschlossen ist, der fünfte Neutralpunkt (53) mit dem sechsten Neutralpunkt (63) verbunden ist;
ein erster Anschluss des sechsten Schalters (K6) mit dem ersten Busanschluss des fünften Umrichters (51) und einem ersten Anschluss des achten Schalters (K8) verbunden ist, ein zweiter Anschluss des sechsten Schalters (K6) mit einem ersten Busanschluss des sechsten Umrichters (61), dem zweiten Busanschluss des zweiten Umrichters (21), dem zweiten Busanschluss des ersten Umrichters (11), der negativen Elektrode der zweiten Leistungsbatterie (2), der positiven Elektrode der vierten Leistungsbatterie (4) und einem ersten Anschluss des siebten Schalters (K7) verbunden ist, und wenn der sechste Schalter (K6) geschlossen ist, der erste Anschluss des sechsten Schalters (K6) mit dem zweiten Anschluss des sechsten Schalters (K6) verbunden ist;
ein zweiter Anschluss des siebten Schalters (K7) mit dem zweiten Busanschluss des fünften Umrichters (51), dem zweiten Busanschluss des sechsten Umrichters (61), der negativen Elektrode der dritten Leistungsbatterie (3) und der negativen Elektrode der vierten Leistungsbatterie (4) verbunden ist; ein dritter Anschluss des siebten Schalters (K7) mit der negativen Elektrode der ersten Leistungsbatterie (1), der positiven Elektrode der dritten Leistungsbatterie (3) und einem zweiten Anschluss des achten Schalters (K8) verbunden ist;
ein dritter Anschluss des achten Schalters (K8) mit dem ersten Busanschluss des ersten Umrichters (11), dem zweiten Schalter (K2) und der positiven Elektrode der ersten Leistungsbatterie (1) verbunden ist; und
die Steuerung konfiguriert ist, um den ersten Schalter (K1) und den fünften Schalter (K5) so zu steuern, dass sie geöffnet sind, und den zweiten Schalter (K2) und den sechsten Schalter (K6) so zu steuern, dass sie in dem zweiten voreingestellten Zustand geschlossen sind, den ersten Anschluss des siebten Schalters (K7) so zu steuern, dass er mit dem zweiten Anschluss des siebten Schalters (K7) verbunden wird, und den ersten Anschluss des achten Schalters (K8) so zu steuern, dass er mit dem dritten Anschluss des achten Schalters (K8) verbunden wird, um es der externen Leistungsversorgung zu ermöglichen, die erste Leistungsbatterie (1), die zweite Leistungsbatterie (2), die dritte Leistungsbatterie (3) und die vierte Leistungsbatterie (4) zu laden, wobei die erste Leistungsbatterie (1) und die dritte Leistungsbatterie (3) als ein Ganzes betrachtet werden und die zweite Batterie (2) und die vierte Leistungsbatterie (4) als ein Ganzes betrachtet werden.

7. Einrichtung nach Anspruch 5 oder 6, wobei
die Steuerung ferner konfiguriert ist, um den fünften Schalter (K5) so zu steuern, dass er geschlossen ist, und den sechsten Schalter (K6) so zu steuern, dass er geöffnet ist, zu steuern, dass der erste Anschluss des siebten Schalters (K7) mit dem dritten Anschluss des siebten Schalters (K7) verbunden wird, und zu steuern, dass der erste Anschluss des achten Schalters (K8) mit dem zweiten Anschluss des achten Schalters (K8) verbunden wird, und das Verbinden/Trennen des ersten Umrichters (11), des zweiten Umrichters (21), des dritten Umrichters (31) und des vierten Umrichters (41) in dem ersten voreingestellten Zustand zu steuern, um zu ermöglichen, dass die erste Leistungsbatterie (1) und die zweite Leistungsbatterie (2) über die erste Energieverarbeitungseinrichtung (10) und die zweite Energieverarbeitungseinrichtung (20) geladen/entladen werden, und um zu ermöglichen, dass die dritte Leistungsbatterie (3) und die vierte Leistungsbatterie (4) über die fünfte Energieverarbeitungseinrichtung (50) und die sechste Energieverarbeitungseinrichtung (60) geladen/entladen werden, um das Erwärmen der ersten Leistungsbatterie (1), der zweiten Leistungsbatterie (2), der dritten Leistungsbatterie (3) und der vierten Leistungsbatterie (4) zu implementieren, wobei
wenn die erste Leistungsbatterie (1) die zweite Leistungsbatterie (2) lädt, die vierte Leistungsbatterie (4) die dritte Leistungsbatterie (3) lädt, und wenn die zweite Leistungsbatterie (2) die erste Leistungsbatterie (1) lädt, die dritte Leistungsbatterie (3) die vierte Leistungsbatterie (4) lädt.

8. Einrichtung nach den Ansprüchen 3 und 6, optional in Kombination mit einem der Ansprüche 6, 7 oder 9, wobei der erste Motor (1), der zweite Motor (2), der dritte Motor (3) und der vierte Motor (4) jeweils Antriebsmotoren in einem Fahrzeug sind;
wobei die Steuerung konfiguriert ist, um den ersten Schalter (K1), den zweiten Schalter (K2), den fünften Schalter (K5) und den sechsten Schalter (K6) so zu steuern, dass sie in einem dritten voreingestellten Zustand geöffnet sind, den ersten Anschluss des siebten Schalters (K7) so zu steuern, dass er mit dem dritten Anschluss des siebten Schalters (K7) verbunden ist, und den ersten Anschluss des achten Schalters (K8) so zu steuern, dass er mit dem zweiten Anschluss des achten Schalters (K8) verbunden ist, um es der ersten Leistungsbatterie (1), der zweiten Leistungsbatterie (2), der dritten Leistungsbatterie (3) und der vierten Leistungsbatterie (4) zu ermöglichen, das Fahrzeug jeweils über den ersten Motor (12), den zweiten Motor (22), den dritten Motor (32) und den vierten Motor (42) anzutreiben.

9. Einrichtung nach einem der Ansprüche 5 bis 8, wobei der erste Umrichter (11), der zweite Umrichter (21), der fünfte Umrichter (51) und der sechste Umrichter (61) jeweils drei Sätze von Brückenzweigen umfassen; und jeder von dem ersten Motor (12), dem zweiten Motor (22), dem fünften Motor (52) und dem sechsten Motor (62) ein Dreiphasenmotor ist und drei Motorwicklungen (L1, L2, L3, L4, L5, L6) umfasst, und in dem ersten voreingestellten Zustand Ströme in den drei Motorwicklungen (L1, L2, L3, L4, L5, L6) in jedem von dem ersten Motor (12), dem zweiten Motor (22), dem dritten Motor (32) und dem vierten Motor (42) zu jedem Zeitpunkt in einer gleichen Richtung sind.

10. Einrichtung nach einem der vorstehenden Ansprüche, wobei
die Steuerung konfiguriert ist, um in dem ersten voreingestellten Zustand durch die erste Leistungsbatterie (1) und die zweite Leistungsbatterie (2) erzeugte Wärme über eine Wärmepumpe in einen Fahrzeuginnenraum zu leiten, um eine Wärmequelle bereitzustellen.

11. Batterie-Selbsterwärmungsverfahren, das auf die Einrichtung nach Anspruch 1 angewendet wird, umfassend:
Steuern (801) eines ersten Schalters so, dass er in einem ersten voreingestellten Zustand geschlossen ist, und Steuern des Verbindens/Trennens eines ersten Umrichters und eines zweiten Umrichters in dem ersten voreingestellten Zustand, um zu ermöglichen, dass eine erste Leistungsbatterie und eine zweite Leistungsbatterie über eine erste Energieverarbeitungseinrichtung und eine zweite Energieverarbeitungseinrichtung geladen/entladen werden, um das Erwärmen der ersten Leistungsbatterie und der zweiten Leistungsbatterie zu implementieren, und
Steuern des ersten Schalters so, dass er geöffnet ist, und Steuern eines zweiten Schalters so, dass er in einem zweiten voreingestellten Zustand geschlossen ist, um zu ermöglichen, dass eine externe Leistungsversorgung die erste Leistungsbatterie und die zweite Leistungsbatterie separat als unabhängige Batteriepacks lädt, wobei
die erste Energieverarbeitungseinrichtung den ersten Umrichter und einen ersten Motor umfasst, und die zweite Energieverarbeitungseinrichtung den zweiten Umrichter und einen zweiten Motor umfasst;
ein erster Busanschluss des ersten Umrichters mit einer positiven Elektrode der ersten Leistungsbatterie verbunden ist, und ein zweiter Busanschluss des ersten Umrichters mit einer negativen Elektrode der ersten Leistungsbatterie, einer negativen Elektrode der zweiten Leistungsbatterie und einem zweiten Busanschluss des zweiten Umrichters verbunden ist;
ein erster Anschluss des ersten Motors mit einem Mittelpunkt des ersten Umrichters verbunden ist, ein erster Anschluss des zweiten Motors mit einem Mittelpunkt des zweiten Umrichters verbunden ist, und ein zweiter Anschluss des ersten Motors gemeinsam verbunden ist, um einen ersten Neutralpunkt zu bilden, und über einen Neutralleiter mit einem zweiten Neutralpunkt verbunden ist, der durch gemeinsames Verbinden eines zweiten Anschlusses des zweiten Motors gebildet wird;
der erste Schalter zwischen dem ersten Neutralpunkt und dem zweiten Neutralpunkt verbunden ist, und wenn der erste Schalter geschlossen ist, der erste Neutralpunkt mit dem zweiten Neutralpunkt verbunden ist;
der zweite Schalter mit der positiven Elektrode der ersten Leistungsbatterie, einer positiven Elektrode der zweiten Leistungsbatterie, dem ersten Busanschluss des ersten Umrichters und einem ersten Busanschluss des zweiten Umrichters verbunden ist, und wenn der zweite Schalter geschlossen ist, die positive Elektrode der ersten Leistungsbatterie, die positive Elektrode der zweiten Leistungsbatterie, der erste Busanschluss des ersten Umrichters und der erste Busanschluss des zweiten Umrichters verbunden sind.

12. Elektrofahrzeug, umfassend die Batterie-Selbsterwärmungseinrichtung nach einem der Ansprüche 1 bis 10.

## Revendications

1. Appareil d'auto-chauffage de batterie, comprenant un premier appareil de traitement d'énergie (10), un deuxième appareil de traitement d'énergie (20), et un dispositif de commande connectés les uns aux autres, et comprenant en outre un premier commutateur (K1) dans lequel
le premier appareil de traitement d'énergie comprend un premier onduleur (11) et un premier moteur (12), et le deuxième appareil de traitement d'énergie (20) comprend un deuxième onduleur (21) et un deuxième moteur (22) ;
une première borne de bus du premier onduleur (11) est connectée à une électrode positive d'une première batterie d'alimentation (1), une seconde borne de bus du premier onduleur (11) est connectée à une électrode négative de la première batterie d'alimentation (1), une électrode négative d'une deuxième batterie d'alimentation (2), et une seconde borne de bus du deuxième onduleur (21) ;
une première borne du premier moteur (12) est connectée à un point médian du premier onduleur (11), une première borne du deuxième moteur (22) est connectée à un point médian du deuxième onduleur (21), et une deuxième borne du premier moteur (12) est connectée conjointement pour former un premier point neutre (13), et le premier point neutre (13) est connecté à un deuxième point neutre (23), formé en connectant conjointement une deuxième borne du deuxième moteur (22), par le biais d'une ligne neutre ;
le premier commutateur (K1) est connecté entre le premier point neutre (13) et le deuxième point neutre (23), et lorsque le premier commutateur (K1) est fermé, le premier point neutre (13) est connecté au deuxième point neutre (23) ; et
le dispositif de commande est configuré pour commander la fermeture du premier commutateur (K1) dans un premier état prédéfini, et commander la connexion/déconnexion du premier onduleur (11) et du deuxième onduleur (21) dans le premier état prédéfini, pour permettre à la première batterie d'alimentation (1) et à la deuxième batterie d'alimentation (2) d'être chargées/déchargées par le biais du premier appareil de traitement d'énergie (10) et du deuxième appareil de traitement d'énergie (20), pour mettre en œuvre le chauffage de la première batterie d'alimentation (1) et de la deuxième batterie d'alimentation (2) ;
**caractérisé en ce que** l'appareil comprend en outre un deuxième commutateur (K2), le deuxième commutateur (K2) étant connecté à l'électrode positive de la première batterie d'alimentation (1), à l'électrode positive de la deuxième batterie d'alimentation (2), à la première borne de bus du premier onduleur (11), et à une première borne de bus du deuxième onduleur (21), et lorsque le deuxième commutateur (K2) est fermé, l'électrode positive de la première batterie d'alimentation (1), l'électrode positive de la deuxième batterie d'alimentation (2), la première borne de bus du premier onduleur (11), et la première borne de bus du deuxième onduleur (21) sont connectées ; et
le dispositif de commande est en outre configuré pour commander l'ouverture du premier commutateur (K1) et commander la fermeture du deuxième commutateur (K2) dans un second état prédéfini, pour permettre à une alimentation externe de charger la première batterie d'alimentation (1) et la deuxième batterie d'alimentation (2) séparément en tant que blocs-batteries indépendants.

2. Appareil selon la revendication 1, dans lequel
le dispositif de commande est configuré pour commander la fermeture simultanée d'un bras de pont supérieur (D1, D2, D3) du premier onduleur (11) et d'un bras de pont inférieur (E4, E5, E6) du deuxième onduleur (21) dans le premier état prédéfini, ou pour commander la fermeture simultanée d'un bras de pont inférieur (D4, D5, D6) du premier onduleur (11) et d'un bras de pont supérieur (E1, E2, E3) du deuxième onduleur (21), pour permettre à la première batterie d'alimentation (1) et à la deuxième batterie d'alimentation (2) d'être chargées/déchargées par le biais du premier appareil de traitement d'énergie (10) et du deuxième appareil de traitement d'énergie (20), pour mettre en œuvre un chauffage de la première batterie d'alimentation (1) et de la deuxième batterie d'alimentation (2).

3. Appareil selon l'une quelconque des revendications précédentes, comprenant en outre un troisième appareil de traitement d'énergie (30) et un troisième commutateur (K3) ;
dans lequel le troisième appareil de traitement d'énergie (30) comprend un troisième onduleur (31) et un troisième moteur (32), une première borne de bus du troisième onduleur (31) est connectée à l'électrode positive de la deuxième batterie d'alimentation (2), à la première borne de bus du deuxième onduleur (21), et au deuxième commutateur (K2), et une seconde borne de bus du troisième onduleur (31) est connectée à l'électrode négative de la première batterie d'alimentation (1), à l'électrode négative de la deuxième batterie d'alimentation (2), à la seconde borne de bus du premier onduleur (11), et à la seconde borne de bus du deuxième onduleur (21) ;
une première borne du troisième moteur (32) est connectée à un point médian du troisième onduleur (31), une deuxième borne du troisième moteur (32) est connectée conjointement pour former un troisième point neutre (33), et le troisième point neutre (33) est connecté au premier commutateur (K1) et au deuxième point neutre (23) par le biais du troisième commutateur (K3) ; et
le dispositif de commande est configuré pour commander la fermeture du premier commutateur (K1) et du troisième commutateur (K3) et commander l'ouverture du deuxième commutateur (K2) dans le premier état prédéfini, et commander la connexion/déconnexion du premier onduleur (11), du deuxième onduleur (21), et du troisième onduleur (31), pour permettre à la première batterie d'alimentation (1) et à la deuxième batterie d'alimentation (2) d'être chargées/déchargées par le biais du premier appareil de traitement d'énergie (10), du deuxième appareil de traitement d'énergie (20), et du troisième appareil de traitement d'énergie (30), pour mettre en œuvre le chauffage de la première batterie d'alimentation (1) et de la deuxième batterie d'alimentation (2).

4. Appareil selon l'une quelconque des revendications précédentes, comprenant en outre un quatrième appareil de traitement d'énergie (40) et un quatrième commutateur (K4), dans lequel
le quatrième appareil de traitement d'énergie (40) comprend un quatrième onduleur (41) et un quatrième moteur (42), une première borne de bus du quatrième onduleur (41) est connectée à l'électrode positive de la première batterie d'alimentation (1), à la première borne de bus du premier onduleur (11), et au deuxième commutateur (K2), et une seconde borne de bus du quatrième onduleur (41) est connectée à l'électrode négative de la première batterie d'alimentation (1), à l'électrode négative de la deuxième batterie d'alimentation (2), à la seconde borne de bus du premier onduleur (11), et à la seconde borne de bus du deuxième onduleur (21) ;
une première borne du quatrième moteur (42) est connectée à un point médian du quatrième onduleur (41), une deuxième borne du quatrième moteur (42) est connectée conjointement pour former un quatrième point neutre (43), et le quatrième point neutre (43) est connecté au premier commutateur (K1) et au premier point neutre (13) par le biais du quatrième commutateur (K4) ; et
le dispositif de commande est configuré pour commander la fermeture du premier commutateur (K1) et du quatrième commutateur (K4) et commander l'ouverture du deuxième commutateur (K2) dans le premier état prédéfini, et commander la connexion/déconnexion du premier onduleur (11), du deuxième onduleur (21), et du quatrième onduleur (41), pour permettre à la première batterie d'alimentation (1) et à la deuxième batterie d'alimentation (2) d'être chargées/déchargées par le biais du premier appareil de traitement d'énergie (10), du deuxième appareil de traitement d'énergie (20), et du quatrième appareil de traitement d'énergie (40), pour mettre en œuvre le chauffage de la première batterie d'alimentation (1) et de la deuxième batterie d'alimentation (2).

5. Appareil selon l'une quelconque des revendications précédentes, comprenant en outre un cinquième appareil de traitement d'énergie (50) et un sixième appareil de traitement d'énergie (60) ;
dans lequel le cinquième appareil de traitement d'énergie (50) comprend un cinquième onduleur (51) et un cinquième moteur (52), et le sixième appareil de traitement d'énergie (60) comprend un sixième onduleur (61) et un sixième moteur (62) ;
une première borne de bus du cinquième onduleur (51) est connectée à l'électrode négative de la première batterie d'alimentation (1), à l'électrode négative de la deuxième batterie d'alimentation (2), à une électrode positive d'une troisième batterie d'alimentation (3), à une électrode positive d'une quatrième batterie d'alimentation (4), à la seconde borne de bus du premier onduleur (11), et à la seconde borne de bus du deuxième onduleur (21) ;
une seconde borne de bus du cinquième onduleur (51) est connectée à une électrode négative de la troisième batterie d'alimentation (3), à une électrode négative d'une quatrième batterie d'alimentation (4), et à une seconde borne de bus du sixième onduleur (61) ;
une première borne du cinquième moteur (52) est connectée à un point médian du cinquième onduleur (51), une première borne du sixième moteur (62) est connectée à un point médian du sixième onduleur (61), et une deuxième borne du cinquième moteur (52) est connectée conjointement pour former un cinquième point neutre (53), et est connectée à un sixième point neutre (63) formé en connectant conjointement une deuxième borne du sixième moteur (62) ; et
le dispositif de commande est configuré pour commander la fermeture du premier commutateur (K1) et commander l'ouverture du deuxième commutateur (K2) dans le premier état prédéfini, et commander la connexion/déconnexion du premier onduleur (11), du deuxième onduleur (21), du cinquième onduleur (51), et du sixième onduleur (61), pour permettre à la première batterie d'alimentation (1), à la deuxième batterie d'alimentation (2), à la troisième batterie d'alimentation (3), et à la quatrième batterie d'alimentation (4) d'être chargées/déchargées par le biais du premier appareil de traitement d'énergie (10), du deuxième appareil de traitement d'énergie (20), du cinquième appareil de traitement d'énergie (50), et du sixième appareil de traitement d'énergie (60), pour mettre en œuvre le chauffage de la première batterie d'alimentation (1), de la deuxième batterie d'alimentation (2), de la troisième batterie d'alimentation (3), et de la quatrième batterie d'alimentation (4).

6. Appareil selon la revendication 5, comprenant en outre un cinquième commutateur (K5), un sixième commutateur (K6), un septième commutateur (K7), et un huitième commutateur (K8) ;
dans lequel le cinquième commutateur (K5) est connecté entre le cinquième point neutre (53) et le sixième point neutre (63), et lorsque le cinquième commutateur (K5) est fermé, le cinquième point neutre (53) est connecté au sixième point neutre (63) ;
une première borne du sixième commutateur (K6) est connectée à la première borne de bus du cinquième onduleur (51) et à une première borne du huitième commutateur (K8), une deuxième borne du sixième commutateur (K6) est connectée à une première borne de bus du sixième onduleur (61), à la seconde borne de bus du deuxième onduleur (21), à la seconde borne de bus du premier onduleur (11), à l'électrode négative de la deuxième batterie d'alimentation (2), à l'électrode positive de la quatrième batterie d'alimentation (4), et à une première borne du septième commutateur (K7), et lorsque le sixième commutateur (K6) est fermé, la première borne du sixième commutateur (K6) est connectée à la deuxième borne du sixième commutateur (K6) ;
une deuxième borne du septième commutateur (K7) est connectée à la seconde borne de bus du cinquième onduleur (51), à la seconde borne de bus du sixième onduleur (61), à l'électrode négative de la troisième batterie d'alimentation (3), et à l'électrode négative de la quatrième batterie d'alimentation (4) ; une troisième borne du septième commutateur (K7) est connectée à l'électrode négative de la première batterie d'alimentation (1), à l'électrode positive de la troisième batterie d'alimentation (3), et à une deuxième borne du huitième commutateur (K8) ;
une troisième borne du huitième commutateur (K8) est connectée à la première borne de bus du premier onduleur (11), au deuxième commutateur (K2), et à l'électrode positive de la première batterie d'alimentation (1) ; et
le dispositif de commande est configuré pour commander l'ouverture du premier commutateur (K1) et du cinquième commutateur (K5), et commander la fermeture du deuxième commutateur (K2) et du sixième commutateur (K6) dans le second état prédéfini, commander la connexion de première borne du septième commutateur (K7) à la deuxième borne du septième commutateur (K7), et commander la connexion de la première borne du huitième commutateur (K8) à la troisième borne du huitième commutateur (K8), pour permettre à l'alimentation externe de charger la première batterie d'alimentation (1), la deuxième batterie d'alimentation (2), la troisième batterie d'alimentation (3), et la quatrième batterie d'alimentation (4), la première batterie d'alimentation (1) et la troisième batterie d'alimentation (3) étant considérées comme un tout et la deuxième batterie (2) et la quatrième batterie d'alimentation (4) étant considérée comme un tout.

7. Appareil selon la revendication 5 ou 6, dans lequel
le dispositif de commande est en outre configuré pour commander la fermeture du cinquième commutateur (K5) et commander l'ouverture du sixième commutateur (K6), commander la connexion de la première borne du septième commutateur (K7) à la troisième borne du septième commutateur (K7), et commander la connexion de la première borne du huitième commutateur (K8) à la deuxième borne du huitième commutateur (K8), et commander la connexion/déconnexion du premier onduleur (11), du deuxième onduleur (21), du troisième onduleur (31), et du quatrième onduleur (41) dans le premier état prédéfini, pour permettre à la première batterie d'alimentation (1) et à la deuxième batterie d'alimentation (2) d'être chargées/déchargées par le biais du premier appareil de traitement d'énergie (10) et du deuxième appareil de traitement d'énergie (20), et pour permettre à la troisième batterie d'alimentation (3) et à la quatrième batterie d'alimentation (4) d'être chargées/déchargées par le biais du cinquième appareil de traitement d'énergie (50) et du sixième appareil de traitement d'énergie (60), pour mettre en œuvre le chauffage de la première batterie d'alimentation (1), de la deuxième batterie d'alimentation (2), de la troisième batterie d'alimentation (3), et de la quatrième batterie d'alimentation (4), dans lequel
lorsque la première batterie d'alimentation (1) charge la deuxième batterie d'alimentation (2), la quatrième batterie d'alimentation (4) charge la troisième batterie d'alimentation (3), et lorsque la deuxième batterie d'alimentation (2) charge la première batterie d'alimentation (1), la troisième batterie d'alimentation (3) charge la quatrième batterie d'alimentation (4).

8. Appareil selon les revendications 3 et 6, éventuellement en combinaison avec l'une quelconque des revendications 6, 7 ou 9, dans lequel le premier moteur (1), le deuxième moteur (2), le troisième moteur (3), et le quatrième moteur (4) sont respectivement des moteurs d'entraînement dans un véhicule ;
dans lequel le dispositif de commande est configuré pour commander l'ouverture du premier commutateur (K1), du deuxième commutateur (K2), du cinquième commutateur (K5), et du sixième commutateur (K6) dans un troisième état prédéfini, commander la connexion de la première borne du septième commutateur (K7) à la troisième borne du septième commutateur (K7), et commander la connexion de la première borne du huitième commutateur (K8) à la deuxième borne du huitième commutateur (K8), pour permettre à la première batterie d'alimentation (1), à la deuxième batterie d'alimentation (2), à la troisième batterie d'alimentation (3), et à la quatrième batterie d'alimentation (4) d'entraîner le véhicule par le biais du premier moteur (12), du deuxième moteur (22), du troisième moteur (32), et du quatrième moteur (42) respectivement.

9. Appareil selon l'une quelconque des revendications 5 à 8, dans lequel le premier onduleur (11), le deuxième onduleur (21), le cinquième onduleur (51), et le sixième onduleur (61) comprennent respectivement trois ensembles de bras de pont ; et chacun parmi le premier moteur (12), le deuxième moteur (22), le cinquième moteur (52), et le sixième moteur (62) est un moteur triphasé, et comprend trois enroulements de moteur (L1, L2, L3, L4, L5, L6), et dans le premier état prédéfini, des courants dans les trois enroulements de moteur (L1, L2, L3, L4, L5, L6) dans chacun du premier moteur (12), du deuxième moteur (22), du troisième moteur (32), et du quatrième moteur (42) sont à chaque instant dans une même direction.

10. Appareil selon l'une quelconque des revendications précédentes, dans lequel
le dispositif de commande est configuré pour exporter, dans le premier état prédéfini, la chaleur générée par la première batterie d'alimentation (1) et la deuxième batterie d'alimentation (2) vers un habitacle de véhicule par le biais d'une pompe à chaleur pour fournir une source de chaleur.

11. Procédé d'auto-chauffage de batterie appliqué à l'appareil selon la revendication 1, comprenant :
la commande (801) de la fermeture d'un premier commutateur dans un premier état prédéfini, et la commande de la connexion/déconnexion d'un premier onduleur et d'un deuxième onduleur dans le premier état prédéfini, pour permettre à une première batterie d'alimentation et à une deuxième batterie d'alimentation d'être chargées/déchargées par le biais d'un premier appareil de traitement d'énergie et d'un deuxième appareil de traitement d'énergie, pour mettre en œuvre le chauffage de la première batterie d'alimentation et de la deuxième batterie d'alimentation, et
la commande de l'ouverture du premier commutateur, et la commande de la fermeture d'un deuxième commutateur dans un second état prédéfini, pour permettre à une alimentation externe de charger la première batterie d'alimentation et la deuxième batterie d'alimentation séparément en tant que blocs-batteries indépendants, dans lequel
le premier appareil de traitement d'énergie comprend le premier onduleur et un premier moteur, et le deuxième appareil de traitement d'énergie comprend le deuxième onduleur et un deuxième moteur ;
une première borne de bus du premier onduleur est connectée à une électrode positive de la première batterie d'alimentation, et une seconde borne de bus du premier onduleur est connectée à une électrode négative de la première batterie d'alimentation, à une électrode négative de la deuxième batterie d'alimentation, et à une seconde borne de bus du deuxième onduleur ;
une première borne du premier moteur est connectée à un point médian du premier onduleur, une première borne du deuxième moteur est connectée à un point médian du deuxième onduleur, et une deuxième borne du premier moteur est connectée conjointement pour former un premier point neutre, et est connectée à un deuxième point neutre formé en connectant conjointement une deuxième borne du deuxième moteur, par le biais d'une ligne neutre ;
le premier commutateur est connecté entre le premier point neutre et le deuxième point neutre, et lorsque le premier commutateur est fermé, le premier point neutre est connecté au deuxième point neutre ;
le deuxième commutateur est connecté à l'électrode positive de la première batterie d'alimentation, à une électrode positive de la deuxième batterie d'alimentation, à la première borne de bus du premier onduleur, et à une première borne de bus du deuxième onduleur, et lorsque le deuxième commutateur est fermé, l'électrode positive de la première batterie d'alimentation, l'électrode positive de la deuxième batterie d'alimentation, la première borne de bus du premier onduleur, et la première borne de bus du deuxième onduleur sont connectées.

12. Véhicule électrique, comprenant l'appareil d'auto-chauffage de batterie selon l'une quelconque des revendications 1 à 10.
